# FASCICULE DE BREVET EUROPEEN

(11) **EP 3 877 199 B1**
(45) Date de publication et mention de la délivrance du brevet: **16.08.2023**
(21) Numéro de dépôt: 19820829.0
(22) Date de dépôt: 06.11.2019
(51) Int. Cl.: B29D 30/02, B29D 30/06, B29D 30/20, B60C 7/12, B60C 9/02, B60C 9/18, B60C 17/04

(54) **PROCEDE DE FABRICATION D'UN PNEUMATIQUE**
HERSTELLUNGSVERFAHREN FÜR EINEN REIFEN
METHOD FOR MANUFACTURING A TYRE

(30) Priorité: 09.11.2018 FR 1860334
(43) Date de publication de la demande: 15.09.2021
(73) Titulaire: COMPAGNIE GENERALE DES ETABLISSEMENTS MICHELIN, 63000 Clermont-Ferrand (FR)
(72) Inventeur: BROUSSEAU, Magaly, 63040 Clermont-Ferrand Cedex 9 (FR); NAGODE, Clément, 63040 Clermont-Ferrand Cedex 9 (FR); RIGO, Sébastien, 63040 Clermont-Ferrand Cedex 9 (FR); SIMONELLI, Thomas, 63040 Clermont-Ferrand Cedex 9 (FR)
(74) Mandataire: Louret, Sylvain
(86) Numéro de dépôt international: PCT/FR2019/052638
(87) Numéro de publication internationale: WO 2020/094986

(56) Documents cités:
- WO-A1-2016/104663
- WO-A1-2017/103490
- WO-A1-2017/103491
- WO-A1-2018/130785
- FR-A1- 3 061 673

## Description

L'invention a pour objet un procédé de fabrication d'un pneumatique.

L'invention concerne le domaine des pneumatiques destinés à équiper des véhicules. Le pneumatique est conçu préférentiellement pour des véhicules de tourisme, mais peut être utilisé sur tout autre type de véhicule tels que des véhicules à deux roues, des véhicules poids lourds, agricoles, de génie civil ou des avions ou, plus généralement, sur tout dispositif roulant.

Un pneumatique classique est une structure torique, destinée à être montée sur une jante, pressurisée par un gaz de gonflage et écrasée sur un sol sous l'action d'une charge. Le pneumatique possède en tout point de sa surface de roulement, destinée à entrer en contact avec un sol, une double courbure: une courbure circonférentielle et une courbure méridienne. Par courbure circonférentielle, on entend une courbure dans un plan circonférentiel, défini par une direction circonférentielle, tangente à la surface de roulement du pneumatique selon la direction de roulement du pneumatique, et une direction radiale, perpendiculaire à l'axe de rotation du pneumatique. Par courbure méridienne, on entend une courbure dans un plan méridien ou radial, défini par une direction axiale, parallèle à l'axe de rotation du pneumatique, et une direction radiale, perpendiculaire à l'axe de rotation du pneumatique.

Dans ce qui suit, l'expression «radialement intérieur, respectivement radialement extérieur» signifie «plus proche, respectivement plus éloigné de l'axe de rotation du pneumatique». L'expression «axialement intérieur, respectivement axialement extérieur» signifie «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

Il est connu que la mise à plat du pneumatique sur un sol horizontal, dans un plan circonférentiel et dans un plan méridien, est conditionnée par les valeurs des rayons de courbure respectivement circonférentiel et méridien, au niveau des points de la surface de roulement positionnés aux limites de l'aire de contact du pneumatique avec le sol. Cette mise à plat est d'autant plus facilitée que ces rayons de courbure sont grands, c'est-à-dire que les courbures sont petites, la courbure en un point, au sens mathématique, étant l'inverse du rayon de courbure. Il est également connu que la mise à plat du pneumatique impacte les performances du pneumatique, en particulier la résistance au roulement, l'adhérence, l'usure et le bruit.

Par conséquent, l'homme du métier, spécialiste du pneumatique, cherchant à obtenir le bon compromis entre les performances attendues du pneumatique telles que, de façon non exhaustive, l'usure, l'adhérence, l'endurance, la résistance au roulement et le bruit, a développé des solutions alternatives au pneumatique classique pour optimiser sa mise à plat.

Un pneumatique classique de l'état de la technique a généralement une grande courbure méridienne, c'est-à-dire un petit rayon de courbure méridien, au niveau des extrémités axiales de la bande de roulement, appelées épaules, lorsque le pneumatique, monté sur sa jante de montage et gonflé à sa pression d'utilisation recommandée, est soumis à sa charge de service. La jante de montage, la pression d'utilisation et la charge de service sont définies par des normes, telles que, par exemple, les normes de la European Tyre and Rim Technical Organisation (ETRTO).

Un pneumatique classique porte la charge appliquée, essentiellement par les extrémités axiales de la bande de roulement, ou épaules, et par les flancs reliant la bande de roulement à des bourrelets assurant la liaison mécanique du pneumatique avec sa jante de montage. Il est connu qu'une mise à plat méridienne d'un pneumatique classique, avec une petite courbure méridienne au niveau des épaules, est généralement difficile à obtenir.

On connait des documents WO 2018/130782 US 4235270, WO 2009/087291 et WO 2005/007422 des pneumatiques, structures pneumatiques et roue décrivant des alternatives à un pneumatique classique.

On connait du document WO 2018/130785 un pneumatique permettant une mise à plat améliorée de la bande de roulement lorsque le pneumatique est soumis à une charge et qui soit facile à fabriquer à partir d'un assemblage adapté. Dans WO 2018/130785, le pneumatique comprend une première structure de premiers éléments filaires, une deuxième structure de deuxièmes éléments filaires, ainsi qu'une structure porteuse comprenant des éléments filaires porteurs reliant la première structure de premiers éléments filaires et la deuxième structure de deuxièmes éléments filaires entre elles, chaque élément filaire porteur comprenant au moins une portion filaire porteuse s'étendant entre la première structure de premiers éléments filaires et la deuxième structure de deuxièmes éléments filaires.

Afin de fabriquer le pneumatique, WO 2018/130785 décrit un procédé dans lequel on enroule l'assemblage décrit autour d'un support d'assemblage sensiblement de révolution. Lors de cette étape d'enroulage, la première structure de premiers éléments filaires est transversalement continue sur toute sa largeur. Puis, on écarte radialement par rapport à l'axe de révolution la première structure de premiers éléments filaires de façon à former un espace annulaire intérieur. Cette étape est généralement appelée conformation du pneumatique. Afin de suivre la conformation qui lui est imposée lors de la fabrication du pneumatique et donc de permettre un allongement de la première structure de premiers éléments filaires, la première structure de premiers éléments filaires rompt totalement en plusieurs points de sa longueur.

Toutefois, le procédé de WO 2018/130785 présente l'inconvénient de générer des à-coups lors de l'étape d'écartement. En effet, les ruptures de la première structure de premiers éléments filaires se font successivement et génèrent, à chaque rupture, un allongement brutal de la première structure de premiers éléments filaires. Il en résulte une étape d'écartement très saccadée qui requiert donc d'être relativement lente, réduisant la productivité du procédé.

En outre, afin que la première structure de premiers éléments filaires rompe lors de l'étape d'écartement, il est nécessaire de dimensionner précisément la première structure de premiers éléments filaires, notamment la force à rupture de certains premiers éléments filaires, mais également les paramètres du procédé, notamment la pression utilisée pour former l'espace annulaire intérieur qui doit être suffisamment élevée pour entrainer la rupture de la première structure de premiers éléments filaires et pas trop élevée pour ne pas dégrader le pneumatique en cours de fabrication.

Ainsi, l'invention a pour but un procédé permettant, d'une part une conformation régulière de la première structure de premiers éléments filaires et, d'autre part, d'utiliser des assemblages ne nécessitant pas de dimensionnement particulier de certains premiers éléments filaires de la première structure.

A cet effet, l'invention a pour objet un procédé de fabrication d'un pneumatique au moyen d'un assemblage comprenant :
- une première structure de premiers éléments filaires, la première structure de premiers éléments filaires s'étendant selon une première direction générale,
- une deuxième structure de deuxièmes éléments filaires,
- une structure porteuse comprenant des éléments filaires porteurs reliant la première structure de premiers éléments filaires et la deuxième structure de deuxièmes éléments filaires entre elles,
procédé dans lequel on enroule, autour d'un support d'assemblage sensiblement de révolution autour d'un axe de révolution, l'assemblage selon la direction circonférentielle du support d'assemblage.

Le procédé selon l'invention est caractérisé en ce que, au plus tard lors de l'étape d'enroulage, la première structure de premiers éléments filaires présente au moins une discontinuité transversale s'étendant transversalement continûment sur toute la largeur de la première structure de premiers éléments filaires, la ou chaque discontinuité transversale étant définie par un couple de deux bords transversaux s'étendant transversalement chacun sur toute la largeur de la première structure de premiers éléments filaires et situé chacun de part et d'autre de la ou de chaque discontinuité transversale selon la première direction générale.

Le procédé selon l'invention est également caractérisé en ce que, postérieurement à l'étape d'enroulage, on écarte radialement par rapport à l'axe de révolution du support d'assemblage, la première structure de premiers éléments filaires de façon à éloigner, selon la direction circonférentielle du support d'assemblage, chaque bord transversal de chaque couple l'un de l'autre de sorte que l'on allonge, selon la direction circonférentielle du support d'assemblage, la première structure de premiers éléments filaires.

Contrairement à WO 2018/130785 dans lequel les discontinuités transversales sont créées lors de l'étape d'écartement, l'invention propose de disposer d'une première structure de premiers éléments filaires comportant déjà, avant l'étape d'écartement, les discontinuités transversales. En d'autres termes, la première structure de premiers éléments filaires est, préalablement à l'étape d'écartement, fractionnée en au moins deux parties selon la première direction générale. Ainsi, la première structure de premiers éléments filaires n'a pas besoin d'être rompue lors de cette étape. Ainsi, la première structure de premiers éléments filaires suit la conformation qui lui est imposée par agrandissement des discontinuités selon la direction circonférentielle du support d'assemblage. Il en résulte un procédé comprenant une conformation régulière et non saccadée et ne nécessitant pas de dimensionnement particulier de certains premiers éléments filaires de la première structure.

Dans la présente demande, une discontinuité transversale s'étendant transversalement continûment sur toute la largeur de la première structure de premiers éléments filaires est telle que l'on peut parcourir la première structure de premiers éléments filaires d'un bord longitudinal à l'autre sans rencontrer d'éléments filaires de la première structure, c'est-à-dire que la discontinuité forme une interruption totale de la première structure de premiers éléments filaires sur toute la largeur de cette dernière.

Le principe de l'assemblage est d'avoir une structure porteuse comprenant des éléments porteurs reliant la première structure de premiers éléments filaires et la deuxième structure de deuxièmes éléments filaires, et capable, une fois l'assemblage agencé dans le pneumatique, de porter la charge appliquée au pneumatique par la mise en tension d'une partie des éléments porteurs positionnés en dehors de l'aire de contact, les éléments porteurs positionnés dans l'aire de contact étant soumis à un flambage car soumis à un effort de compression et ne participant donc pas au port de la charge appliquée.

Par direction générale, on entend la direction générale selon laquelle s'étend la structure d'éléments filaires selon sa plus grande longueur et qui est parallèle aux bords longitudinaux de la structure d'éléments filaires. Ainsi, par exemple, une structure d'éléments filaires enroulée sur une bobine de révolution autour d'un axe présente une direction générale sensiblement parallèle à la direction de déroulage de la structure (ie la direction circonférentielle) qui est perpendiculaire aux directions axiale et radiale de la bobine.

Par élément filaire porteur, on entend tout élément longiligne de grande longueur relativement à sa section transversale, quelle que soit la forme de cette dernière, par exemple circulaire, oblongue, rectangulaire ou carrée, ou même plate, cet élément filaire pouvant être par exemple torsadé ou ondulé. Lorsqu'il est de forme circulaire, son diamètre est de préférence inférieur à 5 mm, plus préférentiellement compris dans un domaine allant de 100 µm à 1,2 mm.

L'assemblage utilisé dans le procédé selon l'invention peut être écru, c'est-à-dire dépourvu de toute composition adhésive destinée à favoriser l'adhésion entres les premiers et/ou deuxièmes éléments filaires avec une composition d'élastomère. L'assemblage utilisé dans le procédé selon l'invention peut également être adhérisé, c'est-à-dire revêtu au moins en partie d'au moins une composition adhésive favorisant une telle adhésion. Dans un mode de réalisation à deux couches, chaque premier et deuxième élément filaire à encoller est revêtu d'une couche d'un primaire d'adhésion et la couche de primaire d'adhésion est revêtue d'une couche de composition adhésive. Dans un mode de réalisation à une couche, chaque premier et deuxième élément filaire à encoller est directement revêtu d'une couche de composition adhésive. Un exemple de primaire d'adhésion est une résine époxy et/ou un composé isocyanate, éventuellement bloqué. La composition adhésive utilisée pourra être une colle RFL classique (Résorcinol-formaldéhyde-latex) ou bien encore les colles décrites dans les demandes WO 2013/017421, WO 2013/017422, WO 2013/017423, WO2015007641 et WO2015007642.

Un élément porteur filaire a un comportement mécanique de type filaire, c'est-à-dire qu'il ne peut être soumis qu'à des efforts d'extension ou de compression selon sa ligne moyenne.

Dans un mode de réalisation préféré, la structure porteuse comprend une pluralité d'éléments porteurs identiques, c'est-à-dire dont les caractéristiques géométriques et les matériaux constitutifs sont identiques.

Les éléments porteurs sont agencés de sorte qu'ils sont deux à deux non liés mécaniquement dans un espace délimité par les première et deuxième structures respectivement de premiers et deuxièmes éléments filaires. Ainsi, les éléments porteurs ont des comportements mécaniques indépendants. Par exemple, les éléments porteurs ne sont pas liés entre eux de façon à former un réseau ou un treillis.

Dans un mode de réalisation préféré, chaque élément filaire porteur est textile. Par textile, on entend que chaque élément filaire porteur est non métallique, et est par exemple réalisé dans un matériau choisi parmi un polyester, un polyamide, une polycétone, un polyuréthanne, un alcool polyvinylique, une cellulose, une fibre minérale, une fibre naturelle, un matériau élastomérique ou un mélange de ces matériaux. Parmi les polyesters on citera par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides, on citera les polyamides aliphatiques tels que les polyamides 4-6, 6, 6-6 (nylon), 11 ou 12 et les polyamides aromatiques tels que l'aramide. Parmi les polyuréthannes, on citera notamment les élasthannes.

Par exemple, chaque élément filaire porteur est un assemblage textile comprenant une ou plusieurs fibres mono-filamentaire ou multi-filamentaires textiles, retordues ensemble ou non. Ainsi, dans un mode de réalisation, on pourra avoir un assemblage dans lequel les fibres sont sensiblement parallèles les unes aux autres. Dans un autre mode de réalisation, on pourra avoir également un assemblage dans lequel les fibres sont enroulées en hélice. Dans encore un autre mode de réalisation, chaque élément filaire porteur est constitué d'un monofilament. Chaque fibre mono-filamentaire ou multi-filamentaire présente un diamètre compris entre 5 et 20 µm, par exemple 10 µm.

Dans un autre mode de réalisation, chaque élément filaire porteur est métallique, par exemple un assemblage de monofilaments métalliques, chaque monofilament métallique présentant un diamètre typiquement inférieur à 50 µm, par exemple 10 µm. Dans un mode de réalisation, chaque élément filaire porteur est constitué d'un assemblage de plusieurs monofilaments métalliques. Dans un autre mode de réalisation, chaque élément filaire porteur est constitué d'un monofilament métallique.

Dans un mode de réalisation, chaque élément filaire porteur s'étend alternativement de la première structure de premiers éléments filaires vers la deuxième structure de deuxièmes éléments filaires et de la deuxième structure de deuxièmes éléments filaires vers la première structure de premiers éléments filaires lorsqu'on se déplace le long de l'élément filaire porteur.

Dans un mode de réalisation, la première structure de premiers éléments filaires présente plusieurs discontinuités transversales réparties le long de la première structure de premiers éléments filaires selon la première direction générale, chaque discontinuité transversale s'étendant transversalement continûment sur toute la largeur de la première structure de premiers éléments filaires.

Ainsi, par rapport à une première structure de premiers éléments filaires comprenant une unique discontinuité transversale, on réparti davantage les discontinuités le long de la première structure de premiers éléments filaires et on en réduit la longueur selon la première direction générale. On obtient un pneumatique plus homogène.

Dans un mode de réalisation, la première structure de premiers éléments filaires est un premier tissu s'étendant selon la première direction générale, le premier tissu comprenant :
- des premiers éléments filaires, dits de chaine, sensiblement parallèles entre eux et s'étendant selon une première direction, dite de chaine, et
- des premiers éléments filaires, dits de trame, sensiblement parallèles entre eux et s'étendant selon une première direction, dite de trame, les premiers éléments filaires de trame s'entrecroisant avec les premiers éléments filaires de chaine,

procédé dans lequel, au plus tard lors de l'étape d'enroulage, chaque premier élément filaire de chaine de la première structure de premiers éléments filaires présente au moins une discontinuité locale, la ou chaque discontinuité locale étant définie par un couple de deux extrémités de chaque premier élément filaire de chaine de la première structure de premiers éléments filaires et située chacune de part et d'autre de la ou de chaque discontinuité locale selon la première direction de chaine,
on écarte radialement par rapport à l'axe de révolution du support d'assemblage, la première structure de premiers éléments filaires de façon à éloigner, selon la direction circonférentielle du support d'assemblage, chaque extrémité de chaque couple l'une de l'autre.

Ainsi, les discontinuités locales des premiers éléments filaires de chaine participent à la formation de la ou chaque discontinuité transversale de la première structure de premiers éléments filaires.

Dans ce mode de réalisation préférentiel, le premier tissu comprend, de manière connue pour l'homme du métier, une armure caractérisant l'entrecroisement des premiers éléments filaires de chaine et de trame. Grâce au procédé selon l'invention, on peut ainsi utiliser n'importe quel type de tissu tel que décrit précédemment sans se soucier d'un dimensionnement ou d'une structure particulière du premier tissu. Ainsi, selon les modes de réalisation, cette armure est de type toile, serge ou satin. De façon préférée, afin de conférer des bonnes propriétés mécaniques dans une utilisation en pneumatique, l'armure est de type toile.

Avantageusement, les premières directions de chaine et de trame forment l'une avec l'autre un angle allant de 70° à 90°, de préférence sensiblement égal à 90°.

Les caractéristiques mécaniques de tels tissus telles que leur rigidité en extension et leur force à force maximale en traction, selon le sens des éléments filaires de chaine ou de trame, dépendent des caractéristiques des éléments filaires, telles que, pour des éléments filaires textiles, le titre, exprimé en tex ou g/1000 m, la ténacité, exprimée en cN/tex, et la contraction standard, exprimée en %, ces éléments filaires étant répartis selon une densité donnée, exprimée en nombre de fils/dm. Toutes ces caractéristiques sont fonction du matériau constitutif des éléments filaires et de leur procédé de fabrication.

De préférence, la première direction de chaine est sensiblement parallèle à la première direction générale.

Ainsi, le procédé est largement facilité. En effet, le premier tissu peut être allongé suffisamment pour suivre la conformation qui lui est imposée lors de la fabrication du pneumatique. Cette capacité à s'allonger du premier tissu permet de poser le premier tissu en l'enroulant simplement autour du support d'assemblage contrairement à d'autres modes de réalisation dans lesquels d'autres solutions, beaucoup plus complexes industriellement, doivent être utilisées pour permettre au premier tissu de suivre la conformation imposée lors de la fabrication du pneumatique, notamment en fabricant un premier tissu dans lequel la première direction de chaine forme un angle avec la première direction générale tel que décrit dans WO2017/005713.

Dans un autre mode de réalisation, le premier tissu ou tricot est un tricot comprenant des boucles entrelacées.

Dans un mode de réalisation, la première structure de premiers éléments filaires comprenant:
- un premier groupe de plusieurs zones transversales, chaque zone transversale du premier groupe comprenant une discontinuité transversale s'étendant continûment sur toute la largeur de la zone transversale du premier groupe,
- un deuxième groupe de plusieurs zones transversales, chaque zone transversale du deuxième groupe étant continue sur toute la largeur de la zone transversale du deuxième groupe, et

chaque zone transversale de chaque premier et deuxième groupe s'étendant sur toute la largeur de la première structure de premiers éléments filaires et les zones transversales du premier et du deuxième groupe étant réparties le long de la première structure de premiers éléments filaires selon la première direction générale,
postérieurement à l'étape d'enroulage, on écarte radialement par rapport à l'axe de révolution du support d'assemblage, la première structure de premiers éléments filaires de façon à éloigner, selon la direction circonférentielle du d'assemblage, chaque bord transversal de chaque couple l'un de l'autre de sorte que l'on allonge, selon la direction circonférentielle du support d'assemblage, chaque zone transversale du premier groupe.

Par définition, une zone transversale est délimitée longitudinalement par deux droites imaginaires sensiblement perpendiculaires à la première direction générale de la structure d'éléments filaires. Une zone transversale s'étend sur toute la largeur de la structure d'éléments filaires, c'est-à-dire que la zone transversale est délimitée transversalement par les bords longitudinaux de la structure d'éléments filaires.

Dans ce mode de réalisation, on réparti les discontinuités dans la pluralité de zones transversales du premier groupe. Les zones transversales du premier et du deuxième groupe sont de préférence réparties périodiquement le long de la première structure de premiers éléments filaires selon la première direction générale. Par périodique, on entend que la succession des zones transversales des premier et deuxième groupes se répète au moins deux fois le long de la première structure de premiers éléments filaires selon la première direction générale.

Chaque zone transversale du deuxième groupe est continue sur toute la largeur de la zone transversale du deuxième groupe, ce qui, en d'autres termes signifie que chaque zone transversale est dépourvue de toute discontinuité s'étendant continûment sur toute la largeur de la zone transversale du deuxième groupe.

Dans ce mode de réalisation, chaque zone transversale du premier groupe est une zone allongeable. De telles zones transversales du premier groupe sont capables de s'allonger lors de la conformation et participent à la conformabilité de la première structure de premiers éléments filaires. Au contraire, chaque zone transversale du deuxième groupe est une zone à longueur fixe. Ainsi, de telles zones transversale du deuxième groupe ne rompent pas et ne s'allongent peu ou pas lors de la conformation et ne participent peu ou pas à la conformabilité de la première structure de premiers éléments filaires. Ainsi, chaque zone transversale allongeable du premier groupe s'allonge pour permettre la conformation de l'assemblage et compense le faible ou non allongement et la non rupture des zones transversales à longueur fixe du deuxième groupe.

Dans un mode de réalisation préféré, on écarte radialement par rapport à l'axe de révolution du support d'assemblage, la première structure de premiers éléments filaires de façon à n'allonger, selon la direction circonférentielle du support d'assemblage, sensiblement aucune zone transversale du deuxième groupe.

Par sensiblement aucun, on entend que l'on n'allonge aucune zone transversale du deuxième groupe ou un nombre insuffisant de zones transversales du deuxième groupe ou bien avec un allongement non significatif pour participer à la conformation de la première structure de premiers éléments filaires. On entend qu'un allongement non significatif est inférieur ou égal à 5% de l'allongement total de la première structure de premiers éléments filaires.

Dans un mode de réalisation, chaque élément filaire porteur comprenant :
- une portion filaire porteuse s'étendant entre la première structure de premiers éléments filaires et la deuxième structure de deuxièmes éléments filaires et
- une première portion filaire d'ancrage de chaque élément filaire porteur dans la première structure de premiers éléments filaires prolongeant la portion filaire porteuse dans la première structure de premiers éléments filaires :
   - chaque zone transversale du premier groupe est dépourvue de toute première portion filaire d'ancrage sur toute la largeur de la première structure de premiers éléments filaires,
   - chaque zone transversale du deuxième groupe de zone(s) droite(s) transversale(s) comprend au moins une première portion filaire d'ancrage sur la largeur de la première structure de premiers éléments filaires.

Ainsi, les discontinuités transversales n'altèrent pas la structure porteuse en raison de leur confinement aux zones transversales du premier groupe qui sont dépourvues de toute première portion filaire d'ancrage.

Préférentiellement, chaque première portion filaire d'ancrage est entrelacée avec la première structure de premiers éléments filaires. Un tel assemblage présente l'avantage de pouvoir être fabriqué en une seule étape. Toutefois, il est également possible d'envisager de fabriquer l'assemblage en deux étapes, une première étape de fabrication de la première structure de premiers éléments filaires et une deuxième étape d'entrelacement du ou des éléments filaires porteurs avec la première structure de premiers éléments filaires. Dans les deux cas, l'entrelacement de chaque élément porteur avec la première structure de premiers éléments filaires permet d'assurer l'ancrage mécanique de chaque élément porteur dans la première structure de premiers éléments filaires et ainsi de conférer les propriétés mécaniques souhaitées à la structure porteuse.

Dans un mode de réalisation, afin d'assurer l'ancrage mécanique de la portion filaire d'ancrage, chaque première portion filaire d'ancrage est enroulée au moins en partie autour d'au moins un premier élément filaire de la première structure de premiers éléments filaires.

Avantageusement, la première structure de premiers éléments filaires est un premier tissu, le premier tissu comprenant :
- des premiers éléments filaires, dits de chaine, sensiblement parallèles entre eux et s'étendant selon une première direction, dite de chaine, sensiblement parallèle à la première direction générale, et
- des premiers éléments filaires, dits de trame, sensiblement parallèles entre eux et s'étendant selon une première direction, dite de trame, et s'entrecroisant avec les premiers éléments filaires de chaine, chaque première portion filaire d'ancrage est enroulée au moins en partie autour d'au moins un premier élément filaire de trame du premier tissu, de préférence autour d'au moins deux premiers éléments filaires de trame adjacents selon la première direction générale.

Dans un mode de réalisation, chaque première portion filaire d'ancrage s'étend selon une direction sensiblement parallèle à la première direction générale.

De préférence, chaque première portion filaire d'ancrage passe alternativement d'une face du premier tissu à l'autre face du premier tissu entre deux premiers éléments filaires de trame adjacents autour desquels la première portion filaire d'ancrage s'enroule.

Très avantageusement, les premiers éléments filaires de chaine s'étendent continûment entre chaque discontinuité transversale. Ainsi, les premiers éléments filaires de chaine ne présentent aucune discontinuité entre chaque discontinuité transversale, à l'exception des éventuels raccords entre deux extrémités de deux premiers éléments filaires qui forment un premier élément filaire de chaine néanmoins continu.

Dans un mode de réalisation préféré, on écarte radialement par rapport à l'axe de révolution du support d'assemblage, la première structure de premiers éléments filaires de façon à n'allonger, selon la direction circonférentielle du support d'assemblage, sensiblement aucune première portion filaire d'ancrage.

Ainsi, chaque zone droite comprenant au moins une première portion filaire d'ancrage est à longueur fixe ce qui permet, lors du procédé de fabrication du pneumatique, de ne pas modifier la longueur des portions filaires porteuses et donc la géométrie de l'assemblage.

Par sensiblement aucune, on entend que l'on n'allonge aucune première portion filaire d'ancrage ou un nombre insuffisant de premières portions filaires d'ancrage ou bien avec un allongement non significatif pour participer à la conformation de la première structure de premiers éléments filaires. On entend qu'un allongement non significatif est inférieur ou égal à 5% de l'allongement total de la première structure de premiers éléments filaires.

Dans un mode de réalisation, chaque zone transversale du premier groupe alterne, selon la première direction générale, avec une zone transversale du deuxième groupe.

Ainsi, à l'échelle de la première structure de premiers éléments filaires, on obtient des discontinuités régulièrement réparties sur l'ensemble de la première structure de premiers éléments filaires.

Optionnellement, chaque premier élément filaire de chaine comprend au moins un brin multifilamentaire comprenant plusieurs monofilaments chacun constitué d'un matériau choisi parmi un polyester, un polyamide, une polycétone, un polyuréthane, une fibre naturelle, une fibre minérale, de préférence choisi parmi un polyester, un polyamide, une polycétone, un polyuréthane et un assemblage de ces matériaux.

De préférence, chaque premier élément filaire de chaine comprend un unique brin multifilamentaire.

Avantageusement, préalablement à une étape dans laquelle on ménage la ou chaque discontinuité transversale, on imprègne la première structure de premiers éléments filaires et la deuxième structure de deuxièmes éléments filaires respectivement par une première composition polymérique et une deuxième composition polymérique.

Ainsi, on imprègne chaque première et deuxième structure d'éléments filaires lorsque la première structure de premiers éléments filaires ne présente pas de discontinuité transversale. Cela facilite l'étape d'imprégnation durant laquelle il est préférable que chaque première et deuxième structure d'éléments filaires présente la tenue longitudinale la plus élevée.

Chaque première et deuxième composition polymérique permet d'assurer la cohésion physico-chimique de l'assemblage avec les autres éléments du pneumatique.

Chaque première et deuxième structure d'éléments filaires de l'assemblage est imprégnée par la composition polymérique correspondante. Ainsi, on peut envisager plusieurs modes de réalisation. Dans un mode de réalisation préféré, chaque structure d'éléments filaires comprend un tissu imprégné par la composition polymérique correspondante. Dans encore un autre mode de réalisation, la première structure de premiers éléments filaires comprend un tissu imprégné par la première composition polymérique et la deuxième structure de deuxièmes éléments filaires comprend un tricot imprégné par la deuxième composition.

Par imprégnée, on entend que chaque composition polymérique pénètre au moins en surface la structure d'éléments filaires. On peut donc avoir une imprégnation unifaciale avec une couverture d'une face de la structure d'éléments filaires par la composition polymérique ou une imprégnation bifaciale avec une couverture des deux faces de la structure d'éléments filaires par la composition polymérique. Dans les deux cas, l'imprégnation permet de créer un ancrage mécanique grâce à la pénétration de la composition polymérique dans les interstices présents dans de la structure d'éléments filaires.

Dans un mode de réalisation, chaque composition polymérique comprend au moins un élastomère, de préférence un élastomère diénique. Par élastomère ou caoutchouc (les deux termes étant synonymes) du type diénique, on entend de manière générale un élastomère issu au moins en partie (i.e. un homopolymère ou un copolymère) de monomères diènes (monomères porteurs de deux doubles liaisons carbone-carbone, conjuguées ou non). Cette composition peut alors se trouver soit à l'état crue ou à l'état cuit.

De manière particulièrement préférentielle, l'élastomère diénique de la composition de caoutchouc est choisi dans le groupe constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Chaque composition polymérique peut contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

Par ailleurs, dans ce mode de réalisation, chaque composition polymérique comprend, en plus de l'élastomère, de préférence diénique, une charge renforçante, par exemple du noir de carbone, un système de réticulation, par exemple un système de vulcanisation et des additifs divers.

Dans un autre mode de réalisation, chaque composition polymérique comprend au moins un polymère thermoplastique. Un polymère thermoplastique est par définition thermofusible. Des exemples de tels polymères thermoplastiques sont les polyamides aliphatiques, par exemple le nylon, les polyesters, par exemple le PET ou le PEN, et les élastomères thermoplastiques.

Les élastomères thermoplastiques (en abrégé "TPE") sont des élastomères se présentant sous la forme de copolymères blocs à base de blocs thermoplastiques. De structure intermédiaire entre polymères thermoplastiques et élastomères, ils sont constitués de manière connue de séquences rigides thermoplastiques, notamment polystyrène reliées par des séquences souples élastomère, par exemple polybutadiène ou polyisoprène pour des TPE insaturés ou poly(éthylène/butylène) pour des TPE saturés. C'est la raison pour laquelle, de manière connue, les copolymères blocs TPE ci-dessus se caractérisent généralement par la présence de deux pics de transition vitreuse, le premier pic (température la plus basse, généralement négative) étant relatif à la séquence élastomère du copolymère TPE, le second pic (température la plus haute, positive, typiquement supérieure à 80°C pour des élastomères préférentiels du type TPS) étant relatif à la partie thermoplastique (par exemple blocs styrène) du copolymère TPE. Ces élastomères TPE sont souvent des élastomères triblocs avec deux segments rigides reliés par un segment souple. Les segments rigides et souples peuvent être disposés linéairement, en étoile ou branchés. Ces élastomères TPE peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène).

De préférence, l'élastomère thermoplastique est insaturé. Par élastomère TPE insaturé, on entend par définition et de manière bien connue un élastomère TPE qui est pourvu d'insaturations éthyléniques, c'est-à-dire qui comporte des doubles liaisons carbone-carbone (conjuguées ou non) ; réciproquement, un élastomère TPE dit saturé est bien entendu un élastomère TPE qui est dépourvu de telles doubles liaisons.

Les première et deuxième compositions polymériques peuvent être différentes ou identiques. Par exemple, la première composition polymérique peut comprendre un élastomère diénique et la deuxième composition polymérique peut comprendre un élastomère thermoplastique ou inversement.

Dans un mode de réalisation avantageux, on ménage la ou chaque discontinuité transversale en découpant la première structure de premiers éléments filaires sur toute la largeur de la première structure de premiers éléments filaires préalablement à l'étape d'enroulage sur le support d'assemblage.

Très avantageusement, préalablement à l'étape de ménagement de la ou chaque discontinuité transversale, on écarte la première structure de premiers éléments filaires et la deuxième structure de deuxièmes éléments filaires l'une de l'autre.

Ainsi, on écarte la première structure de premiers éléments filaires et la deuxième structure de deuxièmes éléments filaires l'une de l'autre de façon ménager, temporairement, un espace intérieur entre la première structure de premiers éléments filaires et la deuxième structure de deuxièmes éléments filaires, permettant ainsi de ne découper que la première structure de premiers éléments filaires et maintenir la continuité de la deuxième structure de deuxièmes éléments filaires. Une telle étape d'écartement est mise en oeuvre manuellement.

Optionnellement, postérieurement à l'étape de ménagement de la ou chaque discontinuité transversale, on rapproche la première structure de premiers éléments filaires et la deuxième structure de deuxièmes éléments filaires l'une de l'autre.

Ainsi, on obtient un assemblage imprégné et fractionné facilement stockable et prêt à être utilisé dans l'étape d'enroulage sur le support d'assemblage.

De préférence, on écarte radialement par rapport à l'axe de révolution la première structure de premiers éléments filaires de façon à former un espace annulaire intérieur délimité radialement par une face interne d'une première structure de révolution comprenant la première structure de premiers éléments filaires et une face interne d'une deuxième structure de révolution comprenant la deuxième structure de deuxièmes éléments filaires.

Dans ce mode de réalisation préférentiel, la première structure de révolution comprend la première structure de premiers éléments filaires imprégnée au moins en partie de la première composition polymérique et la deuxième structure de révolution comprend la deuxième structure de deuxièmes éléments filaires imprégnée au moins en partie de la deuxième composition polymérique.

Dans un mode de réalisation avantageux, on forme l'espace annulaire intérieur par pressurisation par un gaz de gonflage d'une cavité fermée, cette cavité fermée étant formée au moins en partie par l'espace annulaire intérieur. De façon préférée, la cavité fermée est délimitée radialement au moins en partie d'une part, par la première structure de premiers éléments filaires et, d'autre part, par la deuxième structure de deuxièmes éléments filaires.

De façon préférée, lors de l'étape d'enroulage, on enroule, autour du support d'assemblage l'assemblage de sorte que la première direction générale et la direction circonférentielle du support d'assemblage forment un angle inférieur ou égal à 10°.

Dans un premier mode de réalisation, avantageusement, on enroule l'assemblage circonférentiellement sur au plus un tour complet autour de l'axe principal de façon à ce que la première structure de premiers éléments filaires forme, lorsqu'on se déplace axialement d'un bord axial du support d'assemblage à l'autre bord axial du support d'assemblage, un enroulement cylindrique axialement continu de l'assemblage.

Dans ce premier mode de réalisation, avantageusement, on enroule, autour du support d'assemblage l'assemblage de sorte que la première direction générale et la direction circonférentielle du support d'assemblage forment un angle inférieur ou égal à 5°, de préférence un angle sensiblement nul.

Dans ce premier mode de réalisation, dans le cas où la première structure de premiers éléments filaires est un premier tissu tel que décrit précédemment, la première direction de chaine et la direction circonférentielle du support d'assemblage forment un angle inférieur ou égal à 10°, de préférence inférieur ou égal à 5°, et plus préférentiellement un angle sensiblement nul.

Dans un deuxième mode de réalisation, avantageusement, on enroule l'assemblage circonférentiellement sur plusieurs tours complets autour de l'axe principal de façon à ce que la première structure de révolution forme, lorsqu'on se déplace axialement d'un bord axial du support d'assemblage à l'autre bord axial du support d'assemblage, un enroulement cylindrique hélicoïdal axialement discontinu de l'assemblage.

Dans ce deuxième mode de réalisation, avantageusement, on enroule, autour du support d'assemblage l'assemblage de sorte que la première direction générale et la direction circonférentielle du support d'assemblage forme un angle sensiblement non nul inférieur ou égal à 10°, de préférence un angle sensiblement non nul inférieur ou égal à 5°.

Dans ce deuxième mode de réalisation, dans le cas où la première structure de premiers éléments filaires est un premier tissu tel que décrit précédemment, la première direction de chaine et la direction circonférentielle du support d'assemblage forment un angle sensiblement non nul inférieur ou égal à 10°, de préférence un angle sensiblement non nul inférieur ou égal à 5°.

Dans une première variante de ce deuxième mode de réalisation, on enroule l'assemblage de sorte que les bords transversaux d'au moins une discontinuité transversale d'un tour se situent entre les prolongements axiaux des deux bords transversaux d'au moins une discontinuité transversale d'au moins un tour adjacent.

Dans une deuxième variante de ce deuxième mode de réalisation, on enroule l'assemblage de sorte que chaque discontinuité transversale d'un tour est axialement sensiblement alignée avec chaque discontinuité transversale de chaque tour adjacent et que chaque bord transversal de chaque discontinuité transversale d'un tour est axialement sensiblement aligné avec chaque bord transversal de chaque discontinuité transversale de chaque tour adjacent.

Avantageusement, préalablement à l'étape de formation de l'espace annulaire intérieur, on relie entre elles chaque extrémité axiale de la première structure de révolution et chaque extrémité axiale de la deuxième structure de révolution par un flanc, les deux flancs délimitant axialement l'espace annulaire intérieur.

Avantageusement, préalablement à l'étape de formation de l'espace annulaire intérieur, on enroule une structure de révolution de carcasse radialement à l'extérieur de la première structure de révolution.

De façon préférée, on relie continûment chaque extrémité axiale de la deuxième structure de révolution par la structure de révolution de carcasse s'étendant radialement au travers de chaque flanc et axialement sur toute la largeur axiale de la première structure de révolution.

Avantageusement, après l'étape de formation de l'espace annulaire intérieur, on enroule une structure de révolution de sommet radialement à l'extérieur de la première structure de premiers éléments filaires, et de préférence radialement à l'extérieur de la structure de révolution de carcasse.

Avantageusement, après l'étape de formation de l'espace annulaire intérieur, on enroule une bande de roulement radialement à l'extérieur de la première structure de premiers éléments filaires, de préférence radialement à l'extérieur de la structure de révolution de sommet.

De préférence, on enroule simultanément radialement à l'extérieur de la première structure de premiers éléments filaires, et de préférence radialement à l'extérieur de la structure de révolution de carcasse, la structure de révolution de sommet et la bande de roulement préalablement assemblées ensemble.

Avantageusement, la deuxième structure de deuxièmes éléments filaires s'étendant selon une deuxième direction générale, la deuxième direction générale est sensiblement parallèle à la première direction générale.

Dans un mode de réalisation préféré, la deuxième structure de deuxièmes éléments filaires est un deuxième tissu ou tricot.

Dans un mode de réalisation, la deuxième structure de deuxièmes éléments filaires est un tissu comprenant :
- des deuxièmes éléments filaires, dits de chaine, sensiblement parallèles entre eux et s'étendant selon une deuxième direction, dite de chaine, et
- des deuxièmes éléments filaires, dits de trame, sensiblement parallèles entre eux et s'étendant selon une deuxième direction, dite de trame, les deuxièmes éléments filaires de trame s'entrecroisant avec les deuxièmes éléments filaires de chaine.

Dans ce mode de réalisation préférentiel, le deuxième tissu comprend, de manière connue pour l'homme du métier, une armure caractérisant l'entrecroisement des deuxièmes éléments filaires de chaine et de trame. Selon les modes de réalisation, cette armure est de type toile, serge ou satin. De façon préférée, afin de conférer des bonnes propriétés mécaniques dans une utilisation en pneumatique, l'armure est de type toile.

Avantageusement, les deuxièmes directions de chaine et de trame forment l'une avec l'autre un angle allant de 70° à 90°, de préférence sensiblement égal à 90°.

Avantageusement, le deuxième tissu s'étendant selon une deuxième direction générale, la deuxième direction de chaine des deuxièmes éléments filaires étant sensiblement parallèle à la deuxième direction générale. Un tel deuxième tissu permet un procédé de fabrication de l'assemblage et du pneumatique largement facilité.

Dans un autre mode de réalisation, le deuxième tissu ou tricot est un tricot comprenant des boucles entrelacées.

Dans un mode de réalisation, chaque élément filaire porteur comprend une deuxième portion filaire d'ancrage de chaque élément filaire porteur dans la deuxième structure de deuxièmes éléments filaires prolongeant la portion filaire porteuse dans la deuxième structure de deuxièmes éléments filaires.

Préférentiellement, chaque deuxième portion filaire d'ancrage est entrelacée avec la deuxième structure de deuxièmes éléments filaires. Un tel assemblage présente l'avantage de pouvoir être fabriqué en une seule étape. Toutefois, il est également possible d'envisager de fabriquer l'assemblage en deux étapes, une première étape de fabrication de la deuxième structure de deuxièmes éléments filaires et une deuxième étape d'entrelacement du ou des éléments filaires porteurs avec la deuxième structure de deuxièmes éléments filaires. Dans les deux cas, l'entrelacement de chaque élément porteur avec la deuxième structure de deuxièmes éléments filaires permet d'assurer l'ancrage mécanique de chaque élément porteur dans la deuxième structure de deuxièmes éléments filaires et ainsi de conférer les propriétés mécaniques souhaitées à la structure porteuse.

Dans un mode de réalisation, afin d'assurer l'ancrage mécanique de la portion filaire d'ancrage, chaque deuxième portion filaire d'ancrage est enroulée au moins en partie autour d'au moins un deuxième élément filaire de la deuxième structure de deuxièmes éléments filaires.

Avantageusement, la deuxième structure de deuxièmes éléments filaires est un tissu comprenant :
- des deuxièmes éléments filaires, dits de chaine, sensiblement parallèles entre eux et s'étendant selon une deuxième direction, dite de chaine, et
- des deuxièmes éléments filaires, dits de trame, sensiblement parallèles entre eux et s'étendant selon une deuxième direction, dite de trame et s'entrecroisant avec les deuxièmes éléments filaires de chaine,
chaque deuxième portion filaire d'ancrage est enroulée au moins en partie autour d'au moins un deuxième élément filaire de trame du deuxième tissu, de préférence autour d'au moins deux deuxièmes éléments filaire de trame adjacents selon la deuxième direction générale.

Dans un mode de réalisation, chaque deuxième portion filaire d'ancrage s'étend selon une direction sensiblement parallèle à la deuxième direction générale.

De préférence, chaque deuxième portion filaire d'ancrage passe alternativement d'une face du deuxième tissu à l'autre face du deuxième tissu entre deux deuxièmes éléments filaires de trame adjacents autour desquels la deuxième portion filaire d'ancrage s'enroule.

Très avantageusement, les deuxièmes éléments filaires de chaine s'étendent continûment sur toute la longueur du deuxième tissu. Ainsi, les deuxièmes éléments filaires de chaine ne présentent aucune discontinuité le long de chaque deuxième éléments filaires de chaine, à l'exception des éventuels raccords entre deux extrémités de deux éléments filaires qui forment un élément filaire de chaine néanmoins continu.

Le procédé selon l'invention permet de fabriquer un pneumatique de révolution autour d'un axe principal comprenant :
- une première structure de révolution comprenant une première structure de premiers éléments filaires,
- une deuxième structure de révolution comprenant une deuxième structure de deuxièmes éléments filaires, la deuxième structure de révolution étant agencée radialement à l'intérieur de la première structure de révolution,
- une structure porteuse comprenant des éléments filaires porteurs reliant la première structure de premiers éléments filaires et la deuxième structure de deuxièmes éléments filaires entre elles, chaque élément filaire porteur comprenant au moins une portion filaire porteuse s'étendant entre la première structure de premiers éléments filaires et la deuxième structure de deuxièmes éléments filaires,
- un espace annulaire intérieur délimité radialement par une face interne de la première structure de révolution et une face interne de la deuxième structure de révolution, pneumatique dans lequel la première structure de premiers éléments filaires comprend au moins une discontinuité transversale s'étendant transversalement chacune sur toute la largeur de la première structure de premiers éléments filaires.

Conformément à l'invention et comme expliqué ci-dessus, un tel pneumatique est facile à fabriquer.

La première structure de révolution radialement extérieure du pneumatique est destinée à assurer, entre autres fonctions, la liaison de l'assemblage avec une structure de révolution de sommet. La deuxième structure de révolution radialement intérieure du pneumatique est destinée à assurer, entre autres fonctions, la liaison de l'assemblage, et donc du pneumatique, avec le moyen de montage.

La première structure de révolution radialement extérieure du pneumatique présente un axe de révolution confondu avec l'axe de rotation du pneumatique. La deuxième de révolution radialement intérieure du pneumatique est coaxiale à la première structure de révolution radialement extérieure du pneumatique.

En l'absence de charge appliquée au pneumatique et en l'absence de pression dans le pneumatique, l'espace annulaire intérieur a une hauteur radiale moyenne H. Lorsque le pneumatique est soumis à une charge radiale nominale Z_{N} et est en contact avec un sol plan par une surface de contact A, les éléments porteurs, reliés à la portion de la première structure de révolution radialement extérieure du pneumatique en contact avec le sol par l'intermédiaire de la première structure de premiers éléments filaires, sont soumis à un flambage en compression et au moins une partie des éléments porteurs, reliés à la portion de première structure de révolution radialement extérieure du pneumatique non en contact avec le sol, sont en tension.

La première structure de révolution comprend la première structure de premiers éléments filaires imprégnée au moins en partie d'une première composition polymérique et la deuxième structure de révolution comprend la deuxième structure de deuxièmes éléments filaires imprégnée au moins en partie d'une deuxième composition polymérique.

Cette conception permet avantageusement d'avoir un assemblage pouvant être fabriquée de façon indépendante et intégrée d'un seul bloc lors de la fabrication du pneumatique. L'assemblage utilisé peut être solidarisé à d'autres éléments du pneumatique par vulcanisation, collage ou tout autre procédé de liaison des première et deuxième couches des première et deuxième compositions polymériques.

La première structure de premiers éléments filaires radialement extérieure et la deuxième structure de deuxièmes éléments filaires radialement intérieure servent d'interfaces entre les éléments porteurs et les structures de révolution respectivement radialement extérieure et radialement intérieure qui ne sont donc pas en contact direct.

Grâce au pneumatique décrit, on observe une mise à plat améliorée de la bande de roulement, en particulier dans un plan méridien, par une augmentation des rayons de courbure méridiens au niveau des extrémités axiales de la bande roulement.

Il en résulte, en particulier, une homogénéisation des pressions dans l'aire de contact au sol, ce qui contribue à une augmentation de la durée de vie en usure et de l'adhérence du pneumatique.

Enfin, la résistance au roulement d'un tel pneumatique est sensiblement diminuée, ce qui est favorable à une baisse de la consommation de carburant du véhicule.

En mettant en oeuvre le procédé décrit ci-dessus, on peut fabriquer un pneumatique comprenant avantageusement une structure de révolution de sommet agencée radialement à l'extérieur de la première structure de révolution.

On peut également avantageusement fabriquer un pneumatique comprenant deux flancs reliant entre elles chaque extrémité axiale de la première structure de révolution et chaque extrémité axiale de la deuxième structure de révolution, les deux flancs délimitant axialement l'espace annulaire intérieur ; l'espace annulaire intérieur étant agencé de sorte que l'espace annulaire intérieur forme au moins une partie d'une cavité fermée apte à être pressurisée par un gaz de gonflage.

Dans un mode de réalisation préféré, la cavité fermée est délimitée radialement au moins en partie d'une part, par la première structure de révolution et, d'autre part, par la deuxième structure de révolution.

Avantageusement, les flancs ne sont pas liés directement à l'assemblage et de préférence ne sont pas liés directement aux éléments porteurs. Les flancs participent en partie au port de la charge, selon leur propre rigidité structurelle. Toutefois, les flancs ont un comportement mécanique indépendant et n'interfèrent pas dans le comportement mécanique de la structure porteuse. Les flancs comprennent généralement au moins un matériau élastomérique et peuvent comprendre éventuellement une armature de renforcement.

Dans un mode de réalisation préféré, le pneumatique comprend une structure de révolution de carcasse agencée radialement entre la première structure de révolution et la structure de révolution de sommet. Ainsi, une telle structure de carcasse permet de reprendre une partie des efforts exercés par la pression à l'intérieur du pneumatique.

Dans un mode de réalisation particulièrement préféré, la structure de révolution de carcasse comprend une nappe de carcasse comprenant des éléments filaires de renforts de carcasse. Une telle structure de révolution de carcasse favorise la déformation uniforme de la première structure de premiers éléments filaires, et dans les modes de réalisation correspondants, la déformation uniforme des zones transversales du premier groupe. Les inventeurs émettent l'hypothèse que les efforts de déformation selon la première direction générale de la première structure de premiers éléments filaires sont, lors du procédé de fabrication du pneumatique, transmis le long de la première structure de premiers éléments filaires par la structure de révolution de carcasse.

Avantageusement, les éléments filaires de renfort de carcasse s'étendent axialement entre chaque flanc du pneumatique et radialement entre la première structure de révolution et la deuxième structure de révolution.

De préférence, chaque élément filaire de renfort de carcasse s'étend selon une direction faisant un angle supérieur ou égal à 65°, de préférence supérieur ou égal à 80° et plus préférentiellement sensiblement égal à 90° avec la direction circonférentielle du pneumatique.

Avantageusement, la structure de révolution de sommet comprend au moins une nappe de travail, la ou chaque nappe de travail comprenant des éléments filaires de renfort de travail sensiblement parallèles les uns aux autres.

Avantageusement, chaque élément filaire de renfort de travail s'étend axialement d'un bord à l'autre de la nappe de travail.

De préférence, chaque élément filaire de renfort de travail s'étend selon une direction faisant un angle allant de 15° à 40°, de préférence allant de 20° à 30° avec la direction circonférentielle du pneumatique. Dans le cas où la structure de révolution de sommet comprend deux nappes de travail, les éléments filaires de renfort de travail sont croisés d'une nappe de travail par rapport à l'autre.

Avantageusement, la structure de révolution de sommet comprend une nappe de frettage comprenant des éléments filaires de renfort de frettage sensiblement parallèles les uns aux autres formant un angle au plus égal à 10°, de préférence allant de 5° à 10° avec la direction circonférentielle du pneumatique.

Dans un mode de réalisation préféré, la nappe de frettage est agencée radialement à l'extérieur des nappes de travail.

Le pneumatique décrit ci-dessus peut être utilisé dans un ensemble monté comprenant un pneumatique tel que défini ci-dessus, le pneumatique étant monté sur un moyen de montage de l'ensemble monté sur un véhicule.

Le moyen de montage est par exemple une jante. De préférence, le moyen de montage comprend une face coopérant avec une face externe du pneumatique selon l'invention. Les deux faces coopérantes sont maintenues au contact l'une de l'autre, par exemple par collage ou bien par les forces de pression résultant du gonflage du pneumatique.

L'invention sera mieux comprise à la lecture de la description qui va suivre, donnée uniquement à titre d'exemple non limitatif et faite en se référant aux dessins dans lesquels:
- la figure 1 est une vue en perspective et en coupe partielle d'un pneumatique selon un premier mode de réalisation représenté en l'absence de charge appliquée et de pression ;
- la figure 2 est une vue de détail de structures de révolution du pneumatique de la figure 1, notamment d'une structure porteuse comprenant des éléments filaires porteurs ;
- la figure 3 est une vue en coupe circonférentielle du pneumatique de la figure 1, représenté dans un état écrasé sous l'effet d'une charge et en présence de pression ;
- la figure 4 est une vue en coupe méridienne du pneumatique de la figure 3;
- la figure 5 est une vue en arraché du pneumatique de la figure 1 illustrant une première structure de premiers éléments filaires ;
- les figures 6 à 19 sont des vues schématiques des différentes étapes du procédé de fabrication selon l'invention du pneumatique de la figure 1 ;
- la figure 20 est une vue analogue à celle de la figure 1 d'un pneumatique selon un deuxième mode de réalisation ;
- la figure 21 est une vue analogue à celle de la figure 5 d'une première variante du pneumatique de la figure 20 ;
- la figure 22 est une vue analogue à celle de la figure 5 d'une deuxième variante du pneumatique de la figure 20.

Dans les figures, on a représenté un repère X, Y, Z correspondant aux orientations habituelles respectivement axiale (selon la direction YY'), radiale (selon la direction ZZ') et circonférentielle (selon la direction XX') d'un pneumatique. Sur les figures, les axes ZZ' et XX' définissent le plan circonférentiel médian du pneumatique.

### PNEUMATIQUE SELON UN PREMIER MODE DE REALISATION

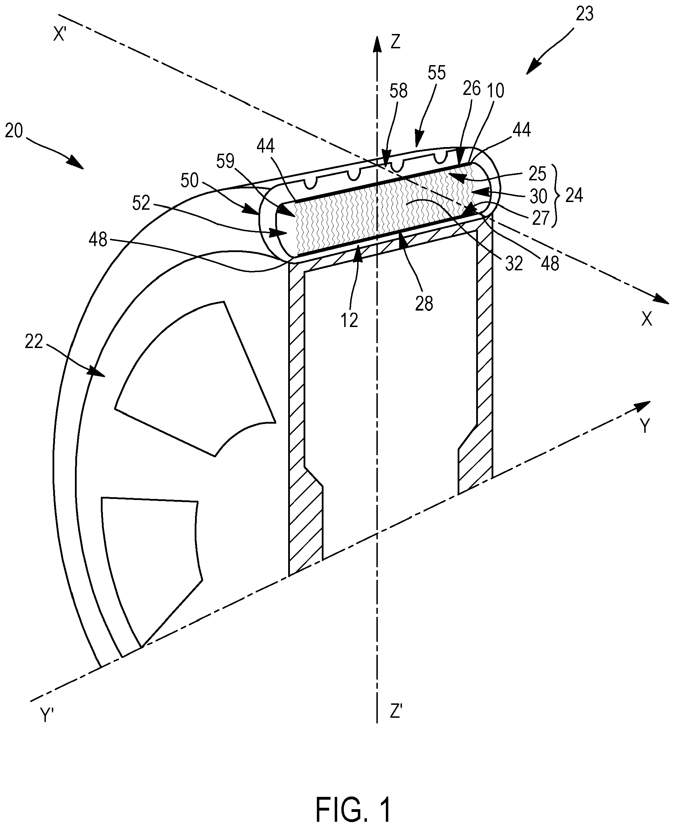

On a représenté sur la figure 1 un pneumatique conforme à un premier mode de réalisation et désigné par la référence générale 20. Le pneumatique 20 est sensiblement de révolution autour d'un axe principal sensiblement parallèle à la direction axiale YY'. Le pneumatique 20 est ici destiné à un véhicule de tourisme. Sur la figure 1, le pneumatique 20 est monté sur un moyen de montage 22, ici une jante, formant ainsi un ensemble monté 23 pour véhicule.

Le pneumatique 20 comprend une première structure de révolution 25 et une deuxième structure de révolution 27. La deuxième structure de révolution 27 est agencée radialement à l'intérieur de la première structure de révolution 25.

Comme illustré sur les figures 1, 8 et 18 notamment, le pneumatique 20 comprend un assemblage 24 comprenant une première structure 10 d'éléments filaires, ici un premier tissu 26, et une deuxième structure 12 d'éléments filaires, ici un deuxième tissu ou tricot 28, et de préférence un tissu 28.

La première structure de révolution 25 comprend la première structure 10 d'éléments filaires, ici le premier tissu 26, et une première couche 33 d'une première composition polymérique 34, le premier tissu 26 étant imprégné au moins en partie de la première composition polymérique 34. La deuxième structure de révolution 27 comprend la deuxième structure 12 d'éléments filaires, ici le deuxième tissu 28, et une deuxième couche 35 d'une deuxième composition polymérique 36, le deuxième tissu 28 étant imprégné au moins en partie de la deuxième composition polymérique 36. En variante, la deuxième structure 27 comprend un tricot imprégné au moins en partie par la deuxième composition polymérique 36. Ainsi, au sein du pneumatique 20, chaque premier et deuxième tissu 26, 28 imprégné forme respectivement chaque première et deuxième structures de révolution 25, 27.

Chaque première et deuxième composition polymérique 34, 36 comprend par exemple une composition élastomérique comprenant au moins un élastomère, de préférence diénique, par exemple du caoutchouc naturel.

L'assemblage 24 comprend également une structure porteuse 30 comprenant des éléments filaires porteurs 32 reliant les premier et deuxième tissus 26, 28 entre eux et s'étendant entre la première structure 10 d'éléments filaires et la deuxième structure 12 d'éléments filaires. La structure porteuse 30 est ici constituée d'une pluralité d'éléments filaires porteurs 32 tous identiques.

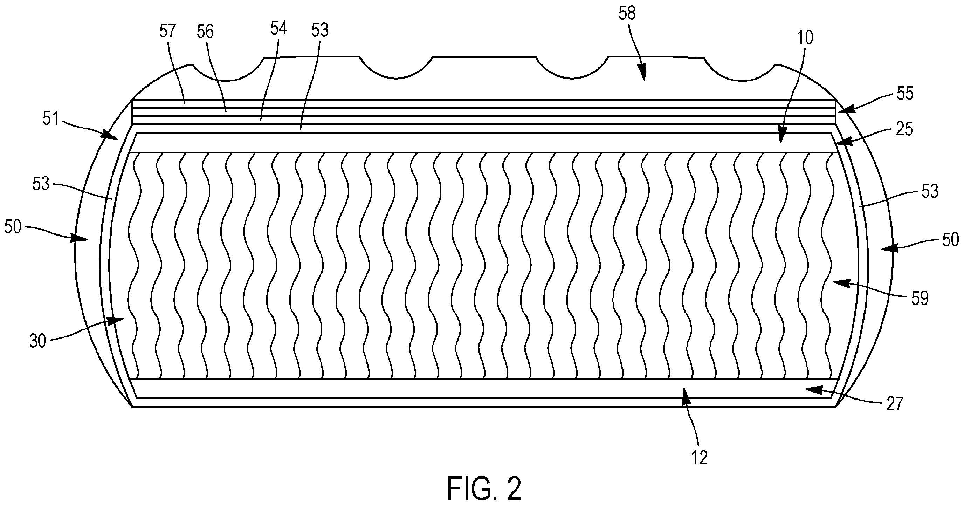

Comme illustré sur la figure 2, le pneumatique 20 comprend une structure de révolution de carcasse 51 et une structure de révolution de sommet 55. La structure de révolution de carcasse 51 est agencée radialement entre la première structure de révolution 25 et la structure de révolution de sommet 55. Le pneumatique 20 comprend également deux flancs 50.

La structure de révolution de carcasse 51 comprend une nappe de carcasse 53 comprenant des éléments filaires de renfort de carcasse s'étendant axialement entre chaque flanc 50 et radialement entre la première structure de révolution 25 et la deuxième structure de révolution 27. Chaque élément filaire de renfort de carcasse s'étend selon une direction faisant un angle supérieur ou égal à 65°, de préférence supérieur ou égal à 80° et ici plus préférentiellement sensiblement égal à 90° avec la direction circonférentielle XX' du pneumatique 20. En l'espèce, les éléments filaires de renfort sont des éléments de renfort filaires textiles, par exemple comprenant deux brins de polyester de 144 tex enroulés à 290 tours ensemble.

La structure de révolution de sommet 55 agencée radialement à l'extérieur de la structure de révolution de carcasse 51 et radialement à l'extérieur de la première structure de révolution 25 comprend deux nappes de travail 54, 56. Chaque nappe de travail 54, 56 comprend des éléments filaires de renfort de travail s'étendant, au sein d'une nappe, sensiblement parallèlement les uns aux autres et axialement d'un bord à l'autre de chaque nappe de travail 54, 56 selon une direction faisant un angle allant de 15° et 40°, de préférence allant de 20° à 30° avec la direction circonférentielle du pneumatique et ici égal à 26°. Les éléments de renfort de travail sont croisés d'une nappe de travail 54, 56 par rapport à l'autre. En l'espèce, les éléments de renfort de travail sont des éléments de renfort filaires métalliques, par exemple des câbles de structure 2x0.30 mm.

La structure de révolution de sommet 55 comprend également une nappe de frettage 57 agencée radialement à l'extérieur des nappes de travail 54, 56. La nappe de frettage 57 comprend des éléments de renfort filaires de frettage sensiblement parallèles les uns aux autres formant un angle au plus égal à 10°, de préférence allant de 5° à 10° avec la direction circonférentielle du pneumatique 10 et ici égal à 5°. En l'espèce, les éléments de renfort de frettage sont des éléments de renfort filaires textiles, par exemple comprenant deux brins d'aramide de 167 tex enroulés à 315 tours ensemble.

Comme illustré sur les figures 1, 2 et 4, le pneumatique 20 comprend également une bande de roulement 58 agencée radialement à l'extérieur de la structure de révolution de sommet 55.

Chaque nappe de carcasse 53, de travail 54, 56 et de frettage 57 comprend une composition polymérique, par exemple une composition élastomérique comprenant au moins un élastomère, de préférence diénique, par exemple du caoutchouc naturel, dans laquelle sont noyés les éléments de renfort correspondants.

La bande de roulement 58 est destinée à entrer en contact avec un sol. La bande de roulement 58 est constituée d'une composition polymérique, par exemple une composition élastomérique comprenant au moins un élastomère, de préférence diénique, par exemple du caoutchouc naturel.

Comme illustré sur les figures 1 et 2, la première structure de révolution 25, la deuxième structure de révolution 27, la structure de carcasse 51, la structure de révolution de sommet 55 et la bande de roulement 58 présentent un axe de révolution commun, en l'espèce l'axe de rotation YY' du pneumatique 20.

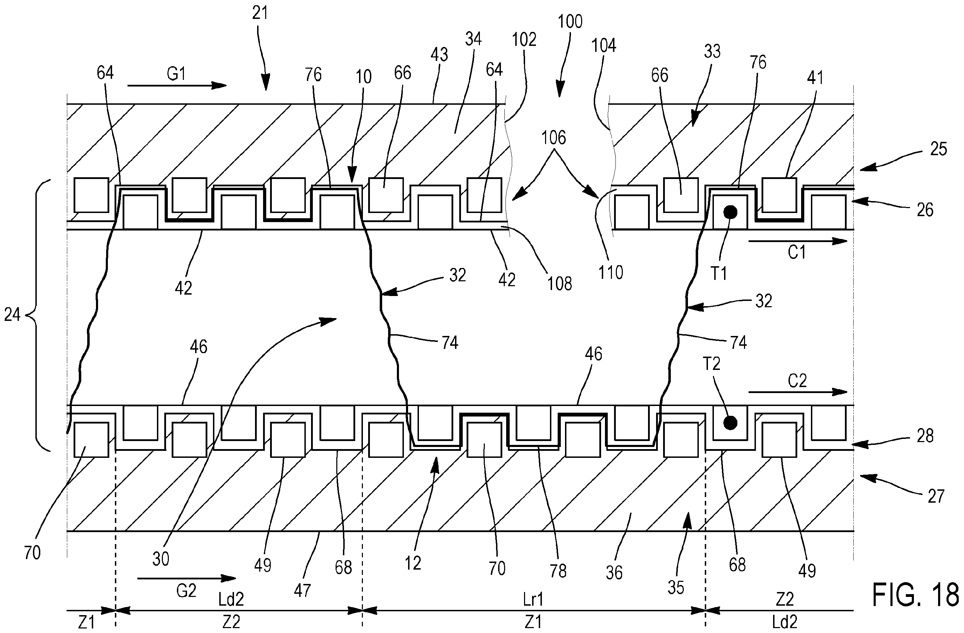

En référence à la figure 18, la première structure de révolution 25 présente une face interne 42 et une face externe 43 ainsi que deux extrémités axiales 44. La face interne 42 est une face interne du premier tissu 26 et la face externe 43 est une face externe de la première couche 33. Le premier tissu 26 comprend également une face externe 41 agencée radialement, au sein du pneumatique 20, à l'extérieur de la face interne 42. Au sein du pneumatique 20, la face interne 42 est agencée radialement à l'intérieur de la face externe 43.

La deuxième structure de révolution 27 présente une face interne 46 et une face externe 47 ainsi que deux extrémités axiales 48. La face interne 46 est une face interne du deuxième tissu 28 et la face externe 47 est une face externe de la deuxième couche 35. Le deuxième tissu 28 comprend également une face externe 49 agencée radialement, au sein du pneumatique 20, à l'intérieur de la face interne 46. Au sein du pneumatique 20, la face interne 46 est agencée radialement à l'extérieur de la face externe 47.

Les deux faces 42 et 46 sont en regard l'une de l'autre et sensiblement parallèle l'une à l'autre. Au sein du pneumatique 20, chaque surface 42, 46 décrit un cylindre de révolution autour de l'axe YY' du pneumatique 20.

Chaque flanc 50 relie entre elles chaque extrémité axiale 44 de la première structure de révolution 25 et chaque extrémité axiale 48 de la deuxième structure de révolution 27. La structure de révolution de carcasse 51 s'étend continûment entre chaque extrémité axiale 48 de la deuxième structure de révolution 27 radialement au travers de chaque flanc 50 et axialement sur toute la largeur axiale de la première structure de révolution 25. Le pneumatique 20 comprend également un espace annulaire intérieur 52 délimité au moins en partie d'une part radialement, par chaque première et deuxième structure de révolution 25, 27 et ici par chaque face interne 42 et 46 et, d'autre part axialement, par les deux flancs 50. L'espace annulaire intérieur 52 est agencé de sorte que l'espace annulaire intérieur 52 forme au moins une partie d'une cavité 59 fermée et apte à être pressurisée par un gaz de gonflage, par exemple de l'air. La cavité fermée 59 est délimitée radialement au moins en partie d'une part, par la première structure 10 de révolution 25 et, d'autre part, par la deuxième structure 12 de révolution 27. Les éléments porteurs 32 sont deux à deux indépendants dans l'espace annulaire intérieur 52.

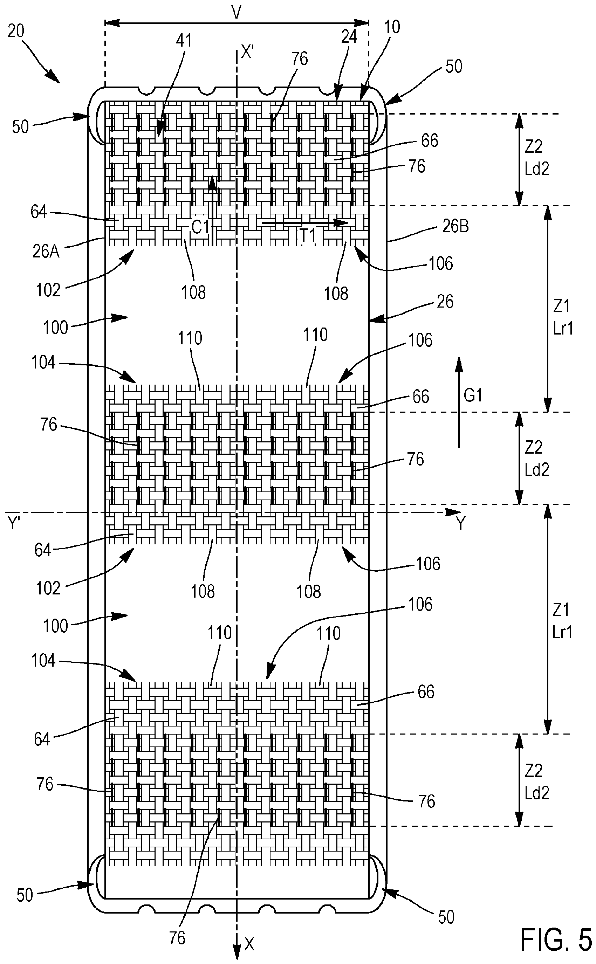

Dans ce premier mode de réalisation, l'assemblage 24 s'étend circonférentiellement sur au plus un tour complet autour de l'axe principal YY' du pneumatique 20 de façon à ce que la première structure de révolution 25 forme un enroulement cylindrique axialement continu de l'assemblage 24 entre les deux flancs 50 du pneumatique 20 comme cela est illustré sur la figure 5.

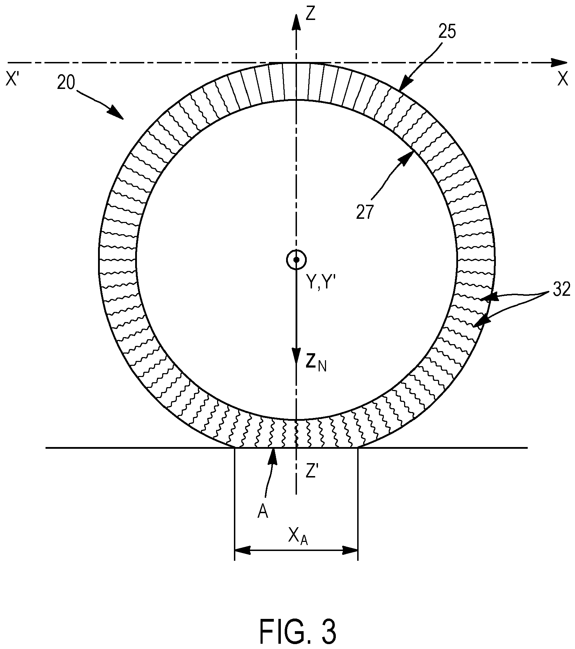

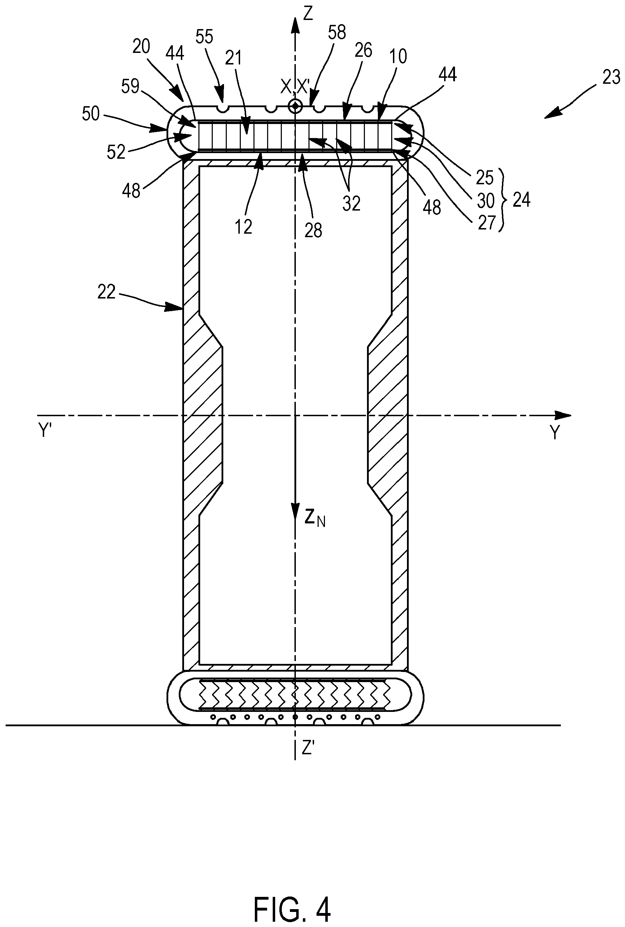

Sur les figures 3 et 4, le pneumatique 20, représenté de façon simplifiée, est soumis à une charge radiale nominale Z_{N}. Le pneumatique 20 est en contact avec un sol plan par une surface de contact A, ayant une longueur circonférentielle X_{A}. Les éléments porteurs 32, reliés à la portion de la première structure de révolution 25 en contact avec le sol par l'intermédiaire de la bande de roulement, sont soumis à flambage en compression, alors qu'au moins une partie des éléments porteurs 32, reliés à la portion de la première structure de révolution 25 non en contact avec le sol, sont en tension. Le pneumatique 20 illustré sur la figure 3 est gonflé a une pression P comprise entre 1.5 bar et 2.5 bars et est soumis à une charge radiale Z_{N} égale à 600 daN.

On a représenté sur la figure 5, la face externe 41 du premier tissu 26 intégré dans le pneumatique 20. On a volontairement omis de représenter la première couche 33 de composition polymérique 34 ainsi que les structures de révolution de carcasse 51, de sommet 55 et la bande de roulement 58 pour des raisons de clarté de l'exposé.

En référence aux figures 5 et 18, la première structure 10 de premiers éléments filaires, ici le premier tissu 26, comprend deux bords longitudinaux 26A et 26B. La première structure 10 de premiers éléments filaires s'étend selon une première direction générale G1 sensiblement parallèle à chaque bord longitudinal 26A, 26B. La première structure 10 de premiers éléments filaires, ici le premier tissu 26, présente une largeur V. Cette largeur V est définie comme la distance droite séparant chaque bord longitudinal 26A, 26B selon une direction sensiblement perpendiculaire à la direction générale G1.

Le premier tissu 26 comprend des premiers éléments filaires 64, appelés premiers éléments filaires de chaine, et des premiers éléments filaires 66, appelés premiers éléments filaires de trame. Les premiers éléments filaires de chaine 64 du premier tissu 26 sont sensiblement parallèles entre eux et s'étendent selon une première direction dite de chaine C1, sensiblement parallèle à la première direction générale G1. Les premiers éléments filaires de trame 66 du premier tissu 26 sont sensiblement parallèles entre eux et s'étendent selon une première direction dite de trame T1 et s'entrecroisent avec les premiers éléments filaires de chaine 64. Les premiers éléments filaires de chaine 64 s'étendent continûment sur toute la longueur du premier tissu 26.

De façon analogue au premier tissu 26, le deuxième tissu 28 comprend deux bords longitudinaux 28A et 28B. Le deuxième tissu 28 s'étend selon une deuxième direction générale G2 sensiblement parallèle à chaque bord longitudinal 28A, 28B. En l'espèce, la deuxième direction générale G2 est sensiblement parallèle à la première direction générale G1. Le deuxième tissu 28 comprend des deuxièmes éléments filaires 68, appelés deuxièmes éléments filaires de chaine, et des deuxièmes éléments filaires 70, appelés deuxièmes éléments filaires de trame. Les deuxièmes éléments filaires de chaine 68 du deuxième tissu 28 sont sensiblement parallèles entre eux et s'étendent selon une deuxième direction dite de chaine C2, sensiblement parallèle à la deuxième direction générale G2. Les deuxièmes éléments filaires de trame 70 du deuxième tissu 28 sont sensiblement parallèles entre eux et s'étendent selon une deuxième direction dite de trame T2 et s'entrecroisent avec les deuxièmes éléments filaires de chaine 68. Les deuxièmes éléments filaires de chaine 68 s'étendent continûment sur toute la longueur du premier tissu 28.

Au sein de chaque premier et deuxième tissu 26, 28, les directions de chaine et de trame forment l'une avec l'autre un angle allant de 70° à 90°. En l'espèce, l'angle est sensiblement égal à 90°.

Au sein du pneumatique 20, chaque première et deuxième direction de chaine C1, C2 est sensiblement parallèle à respectivement chaque première et deuxième direction générale G1, G2 et chaque première et deuxième direction générale G1, G2 forme un angle inférieur ou égal à 10° avec la direction circonférentielle XX' du pneumatique 20. Dans le premier mode de réalisation, chaque première et deuxième direction générale G1, G2 forme un angle inférieur ou égal à 5°, de préférence sensiblement nul avec la direction circonférentielle XX' du pneumatique 20.

Chaque élément filaire 64, 66, 68, 70 est un élément filaire textile.

Les éléments filaires 64 sont tous sensiblement identiques. Chaque premier élément filaire 64 de chaine comprend au moins un brin multifilamentaire comprenant plusieurs monofilaments chacun constitué d'un matériau choisi parmi un polyester, un polyamide, une polycétone, un polyuréthane, une fibre naturelle, une fibre minérale, de préférence choisi parmi un polyester, un polyamide, une polycétone, une fibre naturelle et un assemblage de ces matériaux. Chaque premier élément filaire de chaine comprend un unique brin multifilamentaire. En l'espèce, chaque premier élément filaire comprend un unique brin multifilamentaire en polyamide 66 présentant un titre égal à 11 tex et un module égal à 68,9 cN/tex.

Les éléments filaires 64, 66, 68, 70 sont tous sensiblement identiques, ici réalisés en polyéthylène téréphtalate (PET). En l'espèce, chaque élément filaire 66, 68, 70 est un élément filaire filé présentant une masse linéique égale à 170 tex et une ténacité égale à 66 cN/tex.

Chaque élément filaire porteur 32 s'étend alternativement du premier tissu 26 vers le deuxième tissu 28 et du deuxième tissu 28 vers le premier tissu 26 lorsqu'on se déplace le long de l'élément filaire porteur 32. Chaque élément filaire porteur 32 est un élément filaire porteur textile, ici réalisé en polyéthylène téréphtalate (PET). En l'espèce, chaque élément porteur 32 est un élément filaire filé présentant une masse linéique égale à 55 tex et une ténacité égale à 54 cN/tex.

Chaque élément filaire porteur 32 comprend une portion filaire porteuse 74 s'étendant entre les premier et deuxième tissus 26, 28, notamment entre les faces internes 42 et 46. Chaque élément filaire porteur 32 comprend des première et deuxième portions filaires d'ancrage 76, 78 de l'élément filaire porteur 32 respectivement dans le premier tissu 26 et le deuxième tissu 28. Chaque première et deuxième portion filaire d'ancrage 76, 78 prolonge la portion porteuse 74 respectivement dans chaque premier tissu 26 et deuxième tissu 28. Chaque première et deuxième portion filaire d'ancrage 76, 78 est entrelacée respectivement avec chaque premier tissu 26 et deuxième tissu 28. Chaque première et deuxième portion filaire d'ancrage 76, 78 est enroulée au moins en partie autour respectivement d'au moins un premier élément filaire 64, 66 du premier tissu 26 et d'au moins un deuxième élément filaire 68, 70 du deuxième tissu 28. Ainsi, chaque portion filaire d'ancrage 76, 78 relie deux portions filaires porteuses 74 entre elles et chaque portion filaire porteuse 74 relie deux portion filaire d'ancrage 76, 78 entre elles.

En l'espèce, chaque première portion filaire d'ancrage 76 est enroulée au moins en partie autour d'au moins un premier élément filaire de trame 66 du premier tissu 26 et ici, de préférence, autour d'au moins deux premiers éléments filaire de trame 66 adjacents selon la première direction de chaine C1. De façon analogue, chaque deuxième portion filaire d'ancrage 78 est enroulée au moins en partie autour d'au moins un deuxième élément filaire de trame 68 du deuxième tissu 28, de préférence autour d'au moins deux deuxièmes éléments filaire de trame 66 adjacents selon la deuxième direction de chaine C2.

Chaque première et deuxième portion filaire d'ancrage 76, 78 s'étend selon une direction sensiblement parallèle à respectivement la première et deuxième direction de chaine C1, C2.

Chaque première portion filaire d'ancrage 76 passe alternativement de la face 41 à la face 42 entre deux premiers éléments filaires de trame 66 adjacents autour desquels la première portion filaire d'ancrage 76 s'enroule. De façon analogue, chaque deuxième portion filaire d'ancrage 78 passe alternativement de la face 46 à la face 49 entre deux deuxièmes éléments filaires de trame 68 adjacents autour desquels la deuxième portion filaire d'ancrage 78 s'enroule.

En référence aux figures 5 et 18, la première structure 10 de premiers éléments filaires 64, 66 comprend un premier groupe de plusieurs zones transversales Z1, chaque zone transversale Z1 s'étendant sur toute la largeur V de la première structure 10 de premiers éléments filaires 64, 66. La première structure 10 de premiers éléments filaires 64, 66 comprend également un deuxième groupe de plusieurs zones transversales Z2, chaque zone transversale Z2 s'étendant sur toute la largeur V de la première structure 10 de premiers éléments filaires 64, 66.

Les zones transversales Z1 du premier et Z2 du deuxième groupe sont réparties, ici périodiquement, le long de la première structure 10 de premiers éléments filaires 64, 66 selon la première direction générale G1. Dans ce mode de réalisation, chaque zone transversale Z1 du premier groupe alterne, selon la première direction générale G1 ou selon la direction circonférentielle XX', avec une zone transversale Z2 du deuxième groupe.

Chaque zone transversale Z1 du premier groupe est dépourvue de toute première portion filaire d'ancrage 76 sur toute la largeur V de la première structure 10 de premiers éléments filaires 64, 66. Chaque zone transversale Z2 du deuxième groupe comprend au moins une première portion filaire d'ancrage 78 sur la largeur V de la première structure 10 de premiers éléments filaires 64, 66.

La première structure 10 de premiers éléments filaires 64, 66 présente au moins une discontinuité transversale 100 s'étendant transversalement continûment sur toute la largeur V de la première structure 10 de premiers éléments filaires 64, 66. En l'espèce, la première structure 10 de premiers éléments filaires 64, 66 présente plusieurs discontinuités transversales 100 réparties le long de la première structure 10 de premiers éléments filaires 64, 66 selon la première direction générale G1. Chaque discontinuité transversale 100 s'étend transversalement continûment sur toute la largeur V de la première structure 10 de premiers éléments filaires 64, 66.

Chaque discontinuité transversale 100 est définie par un couple de deux bords transversaux 102, 104 s'étendant transversalement chacun sur toute la largeur V de la première structure 100 de premiers éléments filaires 64, 66. Chaque bord transversal 102, 104 définissant une discontinuité 100 est situé de part et d'autre de cette discontinuité transversale 100 selon la première direction générale G1.

Chaque premier élément filaire de chaine 64 de la première structure 10 de premiers éléments filaires présente au moins une discontinuité locale 106 et ici plusieurs discontinuités locales 106. Chaque discontinuité locale 106 est définie par un couple de deux extrémités 108, 110 du premier élément filaire de chaine 64. Chaque extrémité 108, 110 est située de part et d'autre de la discontinuité locale 106 qu'elles définissent selon la première direction de chaine C1. Les discontinuités locales 106 des premiers éléments filaires 64 de chaine participant à la formation des discontinuités transversales 100 de la première structure 10 de premiers éléments filaires 64, 66.

Dans le mode de réalisation illustré, chaque zone transversale Z1 du premier groupe comprend une discontinuité transversale 100 s'étendant continûment sur toute la largeur V de la zone transversale Z1 du premier groupe. Chaque zone transversale Z2 du deuxième groupe est continue sur toute la largeur V de la zone transversale du deuxième groupe Z2. En d'autres termes, chaque zone transversale Z2 est dépourvue de toute discontinuité s'étendant continûment sur toute la largeur V de la zone transversale Z2 du deuxième groupe.

Les autres caractéristiques de l'assemblage sont déterminables par l'homme du métier, notamment à partir de WO 2018/130785.

### PROCEDE SELON UN PREMIER MODE DE REALISATION DE L'INVENTION DE FABRICATION DU PNEUMATIQUE SELON LE PREMIER MODE DE REALISATION

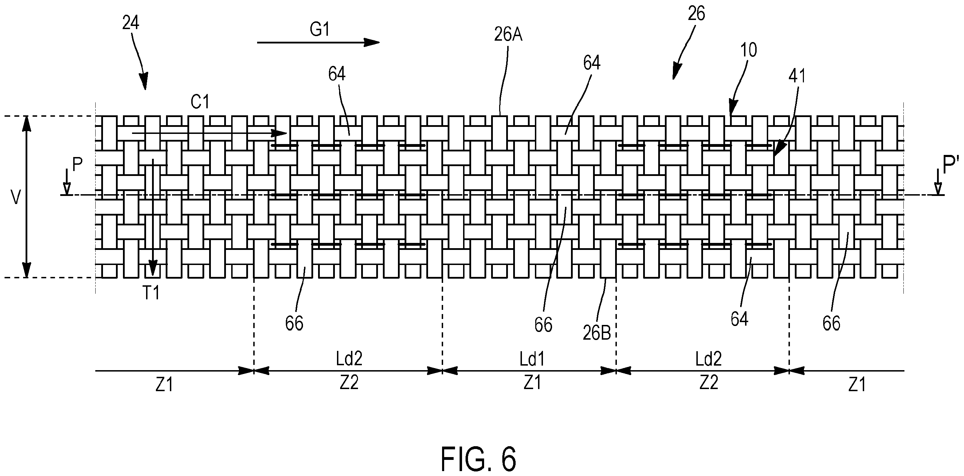

On va maintenant décrire, en référence aux figures 6 à 19, un procédé selon un premier mode de réalisation de l'invention permettant de fabriquer le pneumatique 20 selon le premier mode de réalisation décrit ci-dessus.

On dispose tout d'abord d'un assemblage 24 tel que représenté sur la figure 6.

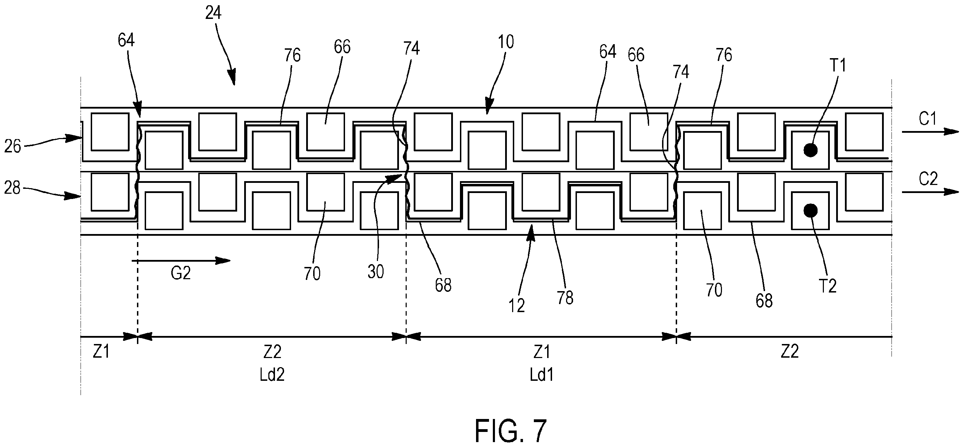

L'assemblage 24 est alors tel que la première structure 10 de premiers éléments filaires est continue d'une part, selon la première direction générale et d'autre part, sur toute sa largeur V. L'assemblage 24 de la figure 6 est représenté dans le plan P-P' sur la figure 7.

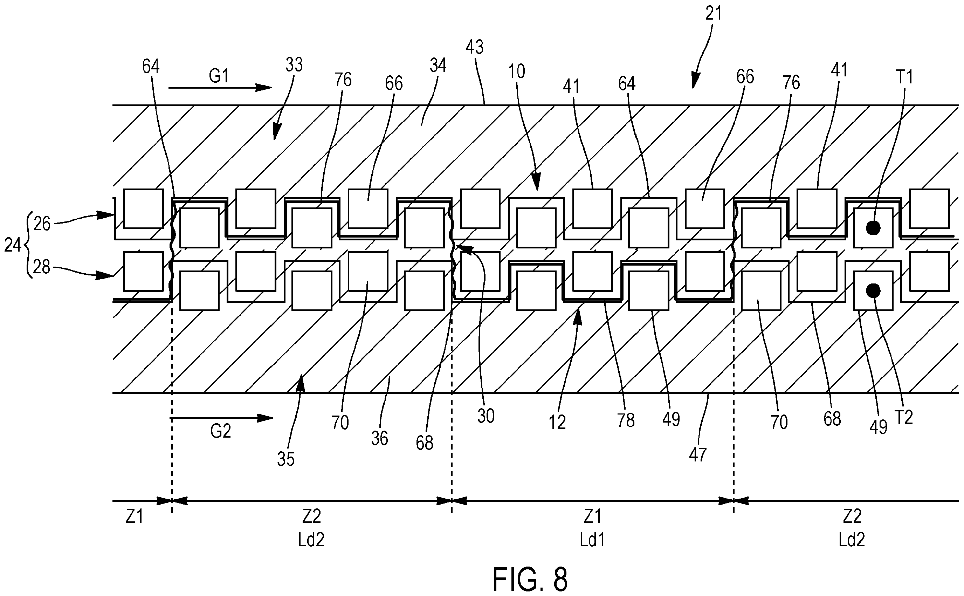

Puis, dans une étape d'imprégnation des premier et deuxième tissus 26, 28, on imprègne la première structure 10 de premiers éléments filaires et la deuxième structure 12 de deuxièmes éléments filaires, ici chaque premier et deuxième tissu 26, 28, respectivement par la première composition polymérique et la deuxième composition polymérique. Une telle étape d'imprégnation est réalisée par exemple par calandrage. On obtient alors l'assemblage imprégné 21 tel que représenté sur la figure 8 sur laquelle chaque première et deuxième structure 10, 12 imprégnée est au contact de l'autre.

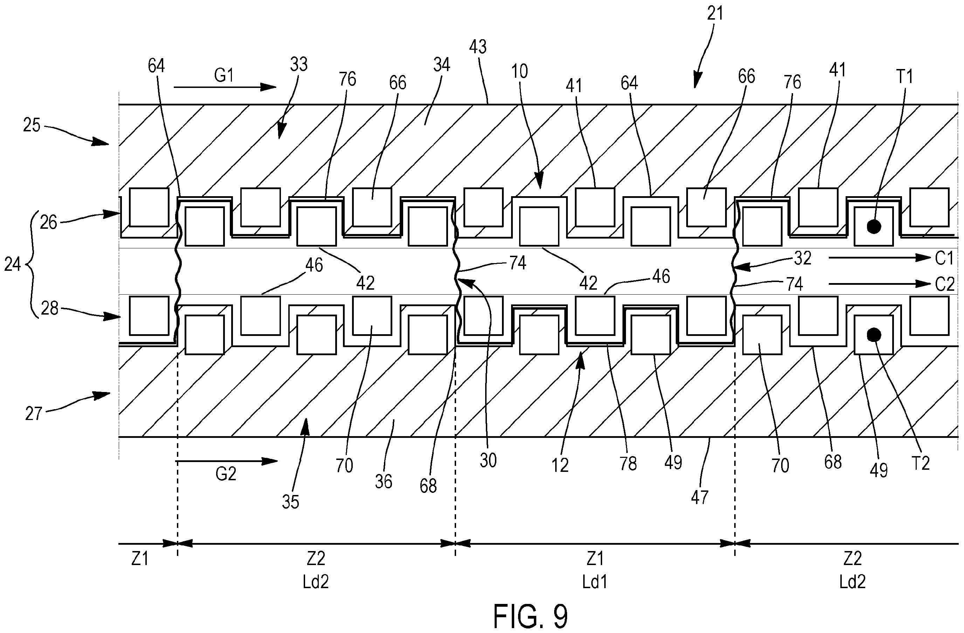

Ensuite, postérieurement à l'étape d'imprégnation, on écarte la première structure 10 de premiers éléments filaires et la deuxième structure 12 de deuxièmes éléments filaires de façon à ménager un espace intérieur entre la première structure 10 de premiers éléments filaires et la deuxième structure 12 de deuxièmes éléments filaires. Une telle étape d'écartement est réalisée manuellement. On obtient alors l'assemblage imprégné 21 tel que représenté sur la figure 9 sur laquelle chaque première et deuxième structure 10, 12 imprégnée est distante de l'autre, c'est-à-dire pas en contact direct avec l'autre autrement que par les éléments filaires porteurs 32.

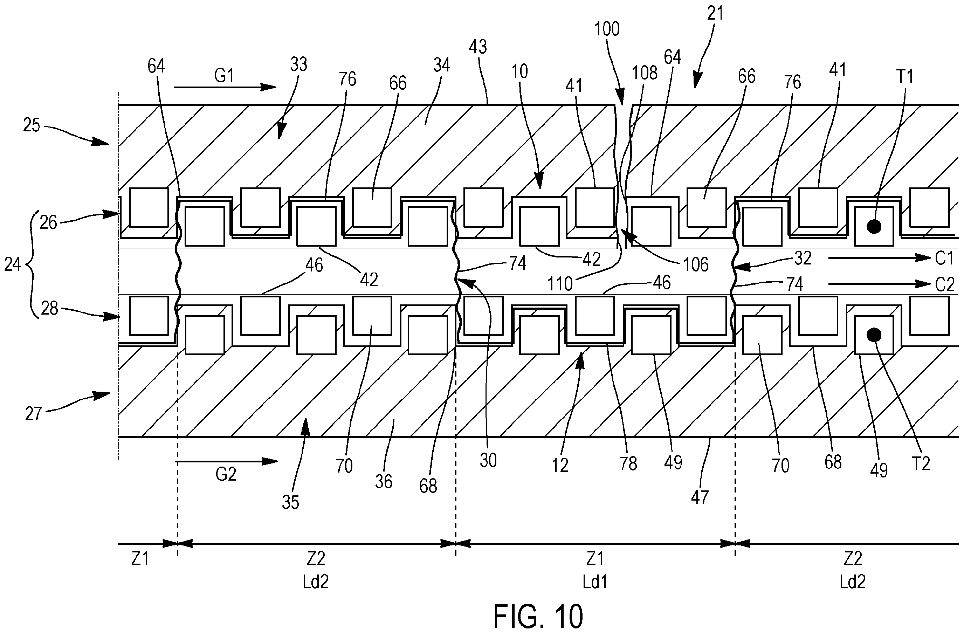

Puis, postérieurement à l'étape d'écartement, on ménage chaque discontinuité transversale 100 en découpant la première structure 10 de premiers éléments filaires sur toute la largeur de cette première structure 10. On obtient alors l'assemblage imprégné 21 tel que représenté sur la figure 10 sur laquelle chaque première et deuxième structure 10, 12 imprégnée est distante de l'autre et la première structure 10 de premiers éléments filaires présente plusieurs discontinuités 100 telles que décrites précédemment. A l'issue de cette étape de ménagement de chaque discontinuité transversale 100, chaque premier élément filaire de chaine 64 de la première structure 10 de premiers éléments filaires présente plusieurs discontinuités locales 106 définissant chacune les deux extrémités 108, 110 correspondantes.

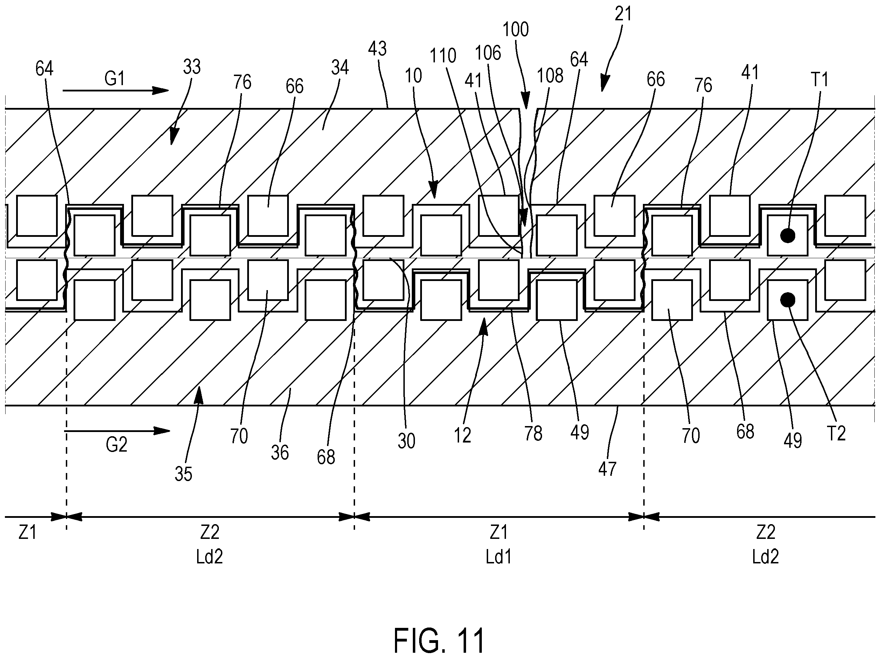

Puis, postérieurement à l'étape de ménagement de chaque discontinuité transversale 100, on rapproche la première structure 10 de premiers éléments filaires et la deuxième structure 12 de deuxièmes éléments filaires l'une de l'autre de façon à mettre en contact chaque première et deuxième structure 10, 12 imprégnée l'une avec l'autre. On obtient alors l'assemblage imprégné 21 tel que représenté sur la figure 11.

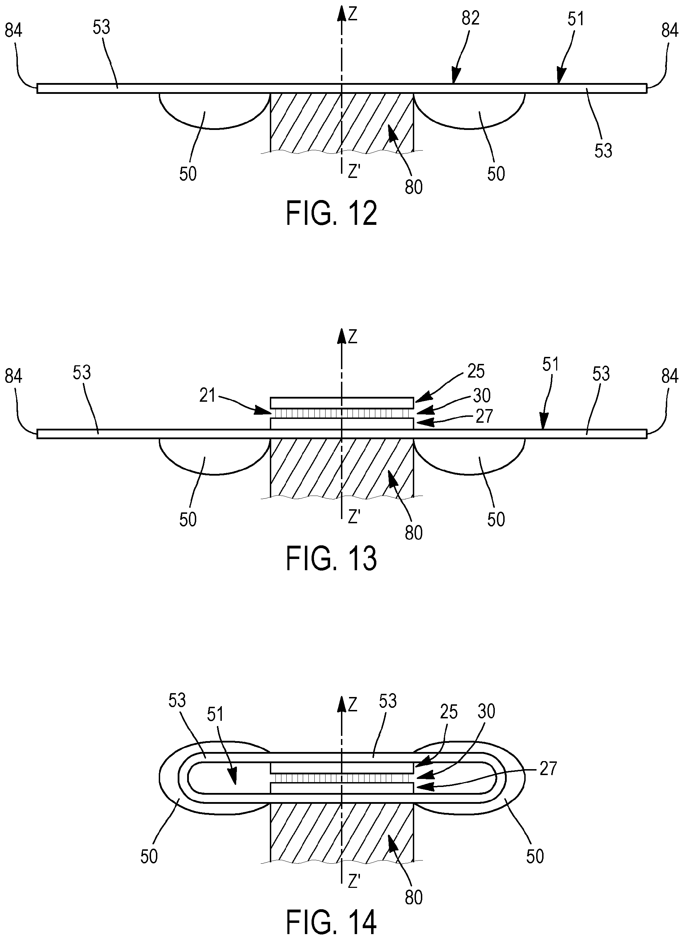

Comme illustré sur les figures 12 à 19, on dispose d'un support d'assemblage 80 dont le diamètre est égal à celui du moyen de montage sur lequel est destiné à être monté le pneumatique 20. Le support d'assemblage 80 est sensiblement de révolution autour d'un axe de révolution coaxial à l'axe de révolution YY' du pneumatique 20.

Tout d'abord, comme illustré sur la figure 12, on pose sur le support d'assemblage 80 un ensemble 82 comprenant la structure de révolution de carcasse 51 et les flancs 50.

Puis, comme illustré sur la figure 13, on enroule autour du support d'assemblage 80 l'assemblage imprégné 21 de la figure 11 selon la direction circonférentielle du support d'assemblage 80, ici sensiblement confondue avec la direction circonférentielle XX' du pneumatique 20, et de sorte que la première direction générale G1 et la direction circonférentielle du support d'assemblage 80 forment un angle inférieur ou égal à 10° et, dans ce premier mode de réalisation, un angle inférieur ou égal à 5°, de préférence un angle sensiblement nul. De plus, comme la première direction de chaine C1 et la première direction générale G1 sont sensiblement parallèle l'une à l'autre, la première direction de chaine C1 et la direction circonférentielle du support d'assemblage 80 forment un angle inférieur ou égal à 10° et, dans ce premier mode de réalisation, un angle inférieur ou égal à 5°, de préférence un angle sensiblement nul. On agence l'assemblage imprégné 21 radialement à l'extérieur de l'ensemble 82 préalablement posé.

A l'issue de cette étape d'enroulage, la première structure 10 de premiers éléments filaires et la deuxième structure 12 de deuxièmes éléments filaires forment respectivement la première structure de révolution 25 et la deuxième structure de révolution 27.

Dans ce premier mode de réalisation, on enroule l'assemblage imprégné 21 circonférentiellement sur au plus un tour complet autour de l'axe principal de façon à ce que la première structure de révolution 25 et donc la première structure 10 de premiers éléments filaires forme, lorsqu'on se déplace axialement d'un bord axial du support d'assemblage 80 à l'autre bord axial du support d'assemblage 80, un enroulement cylindrique axialement continu de l'assemblage imprégné 21.

L'enroulement cylindrique axialement continu présente une largeur axiale supérieure ou égale à 50%, de préférence à 75% à la largeur axiale de la bande de roulement 58. Dans ce mode de réalisation, l'assemblage imprégné 21 est déposé selon un seul tour d'enroulement cylindrique. On parle alors de pose en pleine largeur, puisque la largeur axiale visée l'assemblage imprégné 21 est obtenue en un seul tour d'enroulement cylindrique. L'avantage d'une pose en pleine largeur est la productivité de fabrication. En revanche, une pose en pleine largeur implique nécessairement l'existence d'au moins une zone de recouvrement, ou soudure, selon la direction circonférentielle, entre les extrémités circonférentielles de l'assemblage imprégné 21, en particulier en fin d'enroulement.

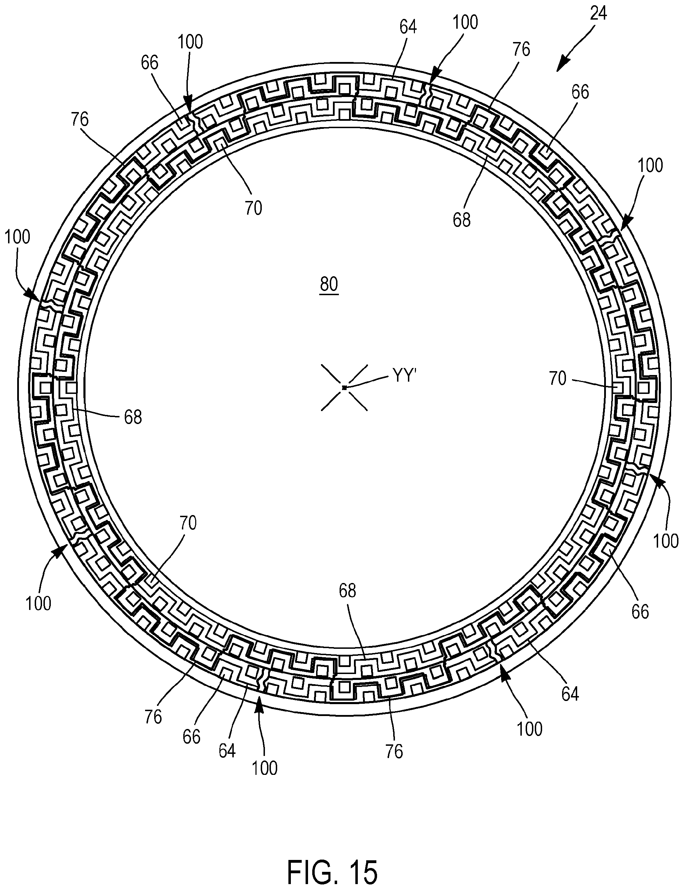

Puis, comme illustré sur la figure 14, préalablement à une étape de formation de l'espace annulaire intérieur 52, dans le mode de réalisation décrit, on relie entre elles chaque extrémité axiale 44 de la première structure de révolution 25 et chaque extrémité axiale 48 de la deuxième structure de révolution 27 par un des flancs 50 de façon à, dans le mode de réalisation décrit, constituer l'espace annulaire intérieur 52. On enroule également la structure de révolution de carcasse 51 radialement à l'extérieur de la première structure de révolution 25 en rabattant les deux extrémités axiales 84 de l'ensemble 82. On relie alors continûment chaque extrémité axiale 48 de la deuxième structure de révolution 27 par la structure de révolution de carcasse 51 qui s'étend radialement au travers de chaque flanc 50 et axialement sur toute la largeur axiale de la première structure de révolution 25. On obtient alors la configuration de l'assemblage illustré sur les figures 14 et 15, la figure 15 étant une vue dans le plan circonférentiel médian perpendiculaire à l'axe YY'. On obtient la cavité fermée 59 délimitée radialement ici d'une part, par la première structure 10 de premiers éléments filaires 64, 66 et, d'autre part, par la deuxième structure 12 de premiers éléments filaires 68, 70. La cavité 59 se trouve ici dans son état non pressurisé.

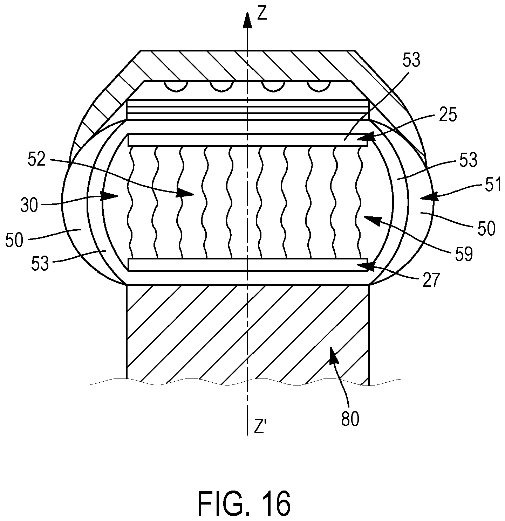

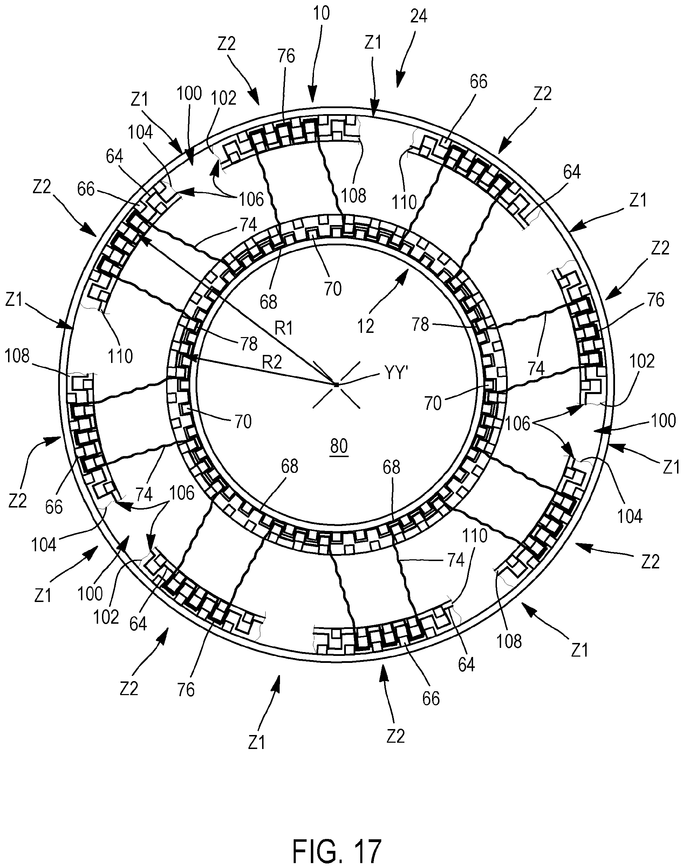

Puis, en référence aux figures 16 et 17, postérieurement à l'étape d'enroulage, on forme l'espace annulaire 52. Pour cela, on écarte radialement par rapport à l'axe de révolution du pneumatique 20 et du support d'assemblage 80, la première structure 10 de premiers éléments filaires de façon à former l'espace annulaire intérieur 52 délimité radialement au moins en partie par la face interne 42 de la première structure de révolution 25 et au moins en partie par la face interne 46 de la deuxième structure de révolution 27.

On forme ainsi l'espace annulaire intérieur 52 par déploiement radial de l'espace annulaire intérieur 52, ici par pressurisation par un gaz de gonflage de la cavité fermée 59.

On réalise cette étape d'écartement de façon à éloigner, selon la direction circonférentielle XX' du support d'assemblage 80, chaque bord transversal 102, 104 de chaque couple de bords transversaux l'un de l'autre de sorte que l'on allonge, selon la direction circonférentielle XX' du support d'assemblage 80, chaque zone transversale Z1 du premier groupe et donc la première structure 10 de premiers éléments filaires. Dans le mode de réalisation illustré utilisant un premier tissu 26, on éloigne selon la direction circonférentielle XX' du support d'assemblage 80, chaque extrémité 108, 110 de chaque coupe définissant une discontinuité locale 106 l'une de l'autre.

De plus, on réalise cette étape d'écartement de façon à n'allonger, selon la direction circonférentielle XX' du support d'assemblage 80, sensiblement aucune zone transversale Z2 du deuxième groupe. Ainsi, dans ce mode de réalisation dans lequel les portions filaires d'ancrage 76 sont réparties uniquement dans les zones transversales Z2 du deuxième groupe, on réalise cette étape d'écartement de façon à n'allonger, selon la direction circonférentielle XX' du support d'assemblage 80, sensiblement aucune portion filaire d'ancrage 76.

Avant l'étape d'enroulage et comme cela est illustré sur la figure 6, l'assemblage imprégné 21 présente une longueur L au repos L=1692 mm et une largeur V=220 mm. Chaque zone transversale Z1 du premier groupe présente une longueur au repos Ld1=8,75 mm et chaque zone transversale Z2 du premier groupe présente une longueur au repos Ld2=6,25 mm. La somme SLd1 des longueurs au repos Ld1 des zones transversales Z1 est égale à 986 mm et la somme SLd2 des longueurs au repos Ld2 des zones transversales Z2 est égale à 706 mm. Le premier tissu comprend ainsi 112 zones transversales Z1 et Z2 entières ainsi que deux zones droites Z1 et Z2 de longueurs inférieures à 8,75 mm et 6,25 mm et ici égales à 6 mm.

Lors de l'étape d'écartement radial de la première structure 10 de premiers éléments filaires, généralement appelé conformation, le diamètre de la première structure 10 de premiers éléments filaires et de la première structure de révolution 25 du pneumatique 20, augmente alors que le diamètre de la deuxième structure de révolution radialement 27 du pneumatique 20, reste sensiblement constant. La distance radiale par rapport à l'axe de révolution YY' du pneumatique 20 du premier tissu 26 augmente de façon significative au cours de la conformation ainsi que sa longueur circonférentielle, augmentation absorbée par l'allongement de la première structure 10 de premiers éléments filaires et de la première structure de révolution 25 du pneumatique 20 conformément à l'invention.

La distance radiale par rapport à l'axe de révolution YY' du pneumatique 20 de la deuxième structure de révolution radialement 27 reste sensiblement constante au cours de la conformation et sa longueur circonférentielle ne varie sensiblement pas.

En référence à la figure 17, la première structure de révolution radialement extérieure 25 a un rayon moyen R1 égal à 313 mm correspondant à une longueur circonférentielle de la première structure de révolution 25 égale à 1966 mm. La deuxième structure de révolution radialement intérieure 27 a un rayon moyen R2 égal à 268 mm correspondant à une longueur circonférentielle de la deuxième structure de révolution 27 égale à 1683 mm. Ainsi, dans l'exemple illustré, pour obtenir le rayon moyen R1, on allonge la première structure de révolution 25, et donc la première structure 10 également, d'une longueur au moins égale à (R1-R2)/R2=16,88 % lors de l'étape d'écartement radial de la première structure 10 de premiers éléments filaires.

A l'issue de l'étape d'écartement radial de la première structure 10 de premiers éléments filaires, la somme des longueurs allongée SLr1 des zones transversales Z1 est sensiblement égale à 1260 mm de sorte que la somme SLr1 des longueurs allongée des zones transversales Z1 et la somme SLd2 des longueurs au repos Ld2 des zones transversales Z2 soit égale à 1966 mm. Chaque zone transversale Z1 présente une longueur allongée Lr1 sensiblement égale ici 11,18 mm. L'assemblage comprenant la première structure 10 de premiers éléments filaires ainsi allongé est représenté sur la figure 18.

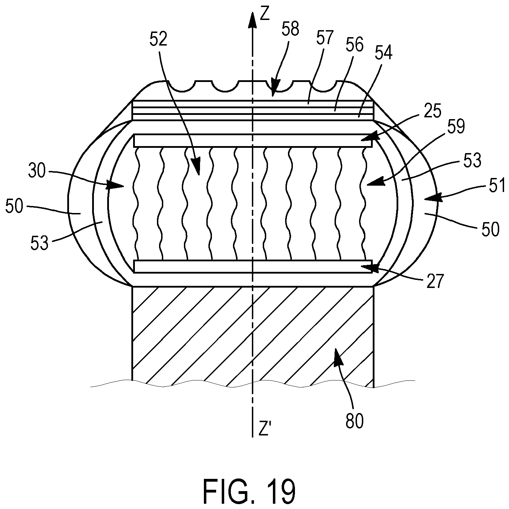

Puis, après l'étape d'écartement radial de la première structure 10 de premiers éléments filaires, on enroule simultanément radialement à l'extérieur de la première structure de révolution 25 et de la structure de révolution de carcasse 51, la structure de révolution de sommet 55 et la bande de roulement 58 préalablement assemblées ensemble. On obtient alors le pneumatique 20 illustré sur la figure 19.

Ensuite, on dépressurise l'espace annulaire intérieur 52 jusqu'à la pression atmosphérique ambiante.

Enfin, on réticule le pneumatique 20, par exemple par vulcanisation, afin d'obtenir le pneumatique 20 à l'état cuit.

### PNEUMATIQUE ET PROCEDE SELON UN DEUXIEME MODE DE REALISATION DE L'INVENTION

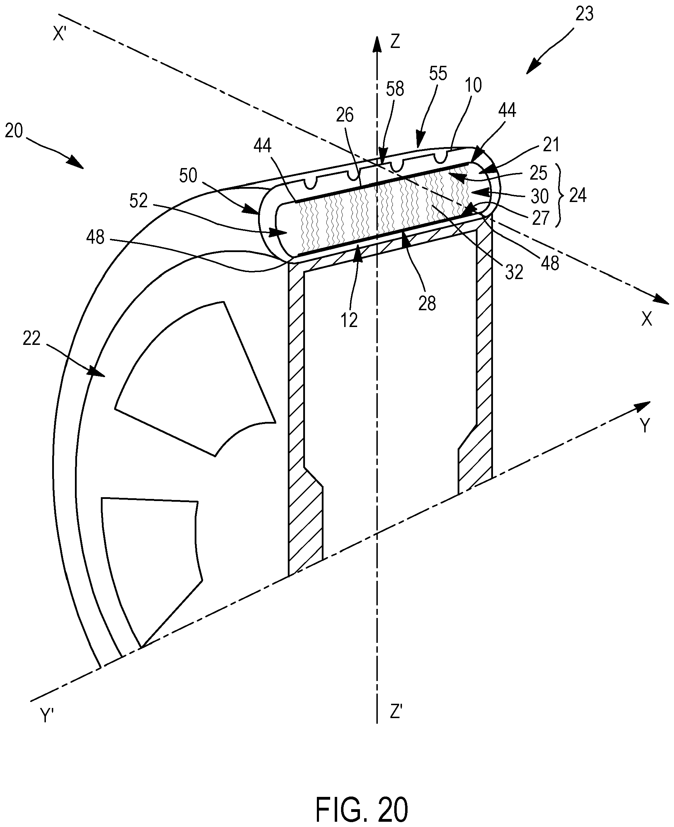

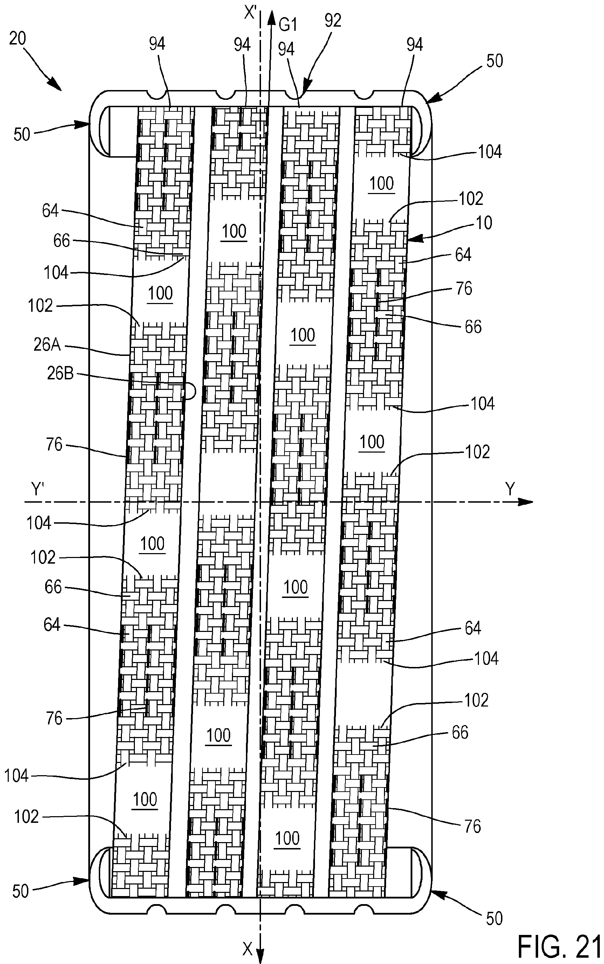

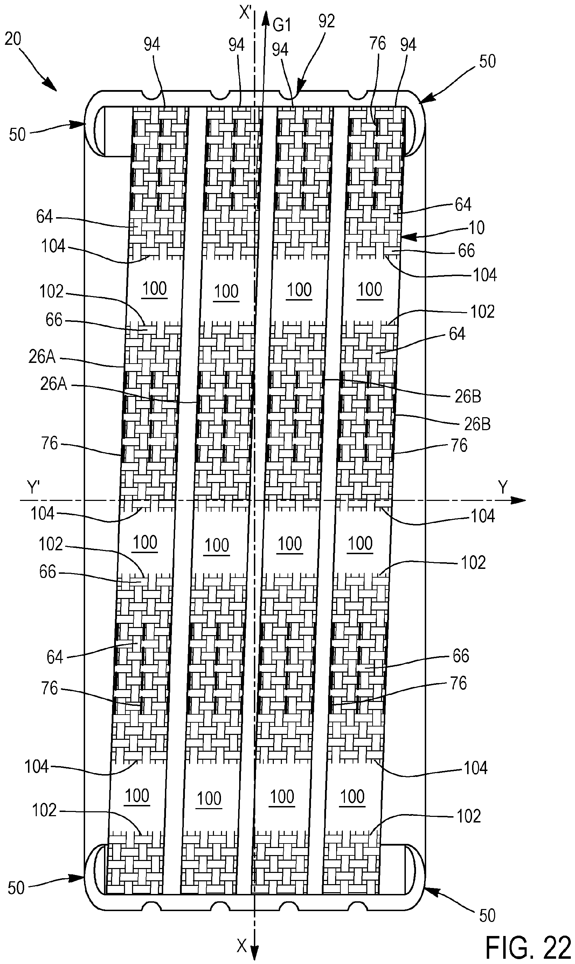

On a représenté sur les figures 20, 21 et 22 un pneumatique 20 selon un deuxième mode de réalisation selon des première et deuxième variantes représentées respectivement sur les figures 21 et 22. Les éléments analogues à ceux représentés sur les figures précédentes sont désignés par des références identiques.

A la différence du pneumatique selon le premier mode de réalisation, dans le pneumatique 20 selon le deuxième mode de réalisation, la première direction générale G1 et la direction circonférentielle XX' du pneumatique 20 forment un angle sensiblement non nul inférieur ou égal à 10°, de préférence un angle sensiblement non nul inférieur ou égal à 5° et ici égal à 5°. Ainsi, lors de l'étape d'enroulage, on enroule l'assemblage de sorte que la première direction générale G1 et la direction circonférentielle XX' du support d'assemblage 80 forment également un angle sensiblement non nul inférieur à 10°, de préférence un angle sensiblement non nul inférieur ou égal à 5° et ici égal à 5°.

Toujours à la différence du pneumatique selon le premier mode de réalisation, dans le pneumatique 20 selon le deuxième mode de réalisation, la première direction de chaine C1 et la direction circonférentielle XX' du pneumatique 20 forment un angle sensiblement non nul inférieur à 10°, de préférence un angle sensiblement non nul inférieur ou égal à 5° et ici égal à 5°. Ainsi, lors de l'étape d'enroulage, on enroule l'assemblage de sorte que la première direction de chaine C1 et la direction circonférentielle XX' du support d'assemblage 80 forment également un angle sensiblement non nul inférieur à 10°, de préférence un angle sensiblement non nul inférieur ou égal à 5° et ici égal à 5°.

L'assemblage 24 s'étend circonférentiellement sur plusieurs tours complets autour de l'axe principal de façon à ce que la première structure de révolution 25 forme un enroulement hélicoïdal axialement discontinu de l'assemblage 24 entre les deux flancs 50 du pneumatique 20. Au cours du procédé, on enroule l'assemblage 24 circonférentiellement sur plusieurs tours complets autour de l'axe principal YY' du support d'assemblage 80 de façon à ce que la première structure de révolution 25 forme, lorsqu'on se déplace axialement d'un bord axial du support d'assemblage 80 à l'autre bord axial du support d'assemblage 80, un enroulement hélicoïdal axialement discontinu de l'assemblage 24.

Dans ce mode de réalisation, l'assemblage imprégné 21 est enroulé autour de l'axe du pneumatique 20 de façon à former l'enroulement hélicoïdal d'une bandelette d'assemblage 92, les portions axiales 94 de la bandelette 92 étant axialement juxtaposées. Par bandelette, on entend un assemblage imprégné 21 ayant une largeur axiale limitée, au plus égale à 30% de la largeur axiale de la bande de roulement 58, et de grande longueur au moins égale à deux fois la circonférence de la bande de roulement 58, de façon à ce que la bandelette à poser puisse être stockée sous forme de rouleau. Une telle bandelette est ainsi déroulée selon une hélice, ayant pour axe de révolution l'axe de révolution YY' du pneumatique 20. Le nombre de tours d'enroulement hélicoïdal de la bandelette est déterminé par la largeur axiale totale de l'enroulement hélicoïdal visée et par la densité d'éléments porteurs 32. La pose de la bandelette peut être jointive, c'est-dire que les portions de bandelette sont en contact deux à deux par leurs bords axiaux, ou non jointives, c'est-à-dire que les bords axiaux des portions axiales 94 de bandelette sont espacées d'un espace sensiblement non nul. L'avantage d'une pose en bandelette est l'absence de zones de recouvrement, ou soudures, selon la direction circonférentielle, entre des portions axiales de bandelette, en fin d'enroulement.

Dans la première variante de deuxième mode de réalisation représentée sur la figure 21, on enroule l'assemblage imprégné 21 de sorte que les bords transversaux 102, 104 d'au moins une discontinuité transversale 100 d'un tour se situent entre les prolongements axiaux des deux bords transversaux 102, 104 d'une ou plusieurs discontinuités transversales 100 d'au moins un tour adjacent.

Dans la deuxième variante de deuxième mode de réalisation représentée sur la figure 22, on enroule l'assemblage imprégné 21 de sorte que chaque discontinuité transversale 100 d'un tour est axialement sensiblement alignée avec chaque discontinuité transversale 100 d'un tour adjacent et que chaque bord transversal 102, 104 de chaque discontinuité transversale 100 d'un tour est axialement sensiblement aligné avec chaque bord transversal 102, 104 de chaque discontinuité transversale de chaque tour adjacent.

L'invention ne se limite pas aux modes de réalisation décrits ci-dessus.

En particulier, dans un mode de réalisation non décrit précédemment, on peut mettre en oeuvre un procédé avec un assemblage non imprégné, la jante 22 et la structure de révolution de sommet 55 assurant l'étanchéité radiale de l'espace annulaire intérieur 52.

En outre, on pourrait également mettre en oeuvre l'invention avec un tricot en remplacement d'un ou des tissus 26, 28.

## Revendications

1. Procédé de fabrication d'un pneumatique (20) au moyen d'un assemblage (24) comprenant :
- une première structure (10) de premiers éléments filaires (64, 66), la première structure (10) de premiers éléments filaires (64, 66) s'étendant selon une première direction générale (G1),
- une deuxième structure (12) de deuxièmes éléments filaires (68, 70),
- une structure porteuse (30) comprenant des éléments filaires porteurs (32) reliant la première structure (10) de premiers éléments filaires (64, 66) et la deuxième structure (12) de deuxièmes éléments filaires (68, 70) entre elles,
procédé dans lequel on enroule, autour d'un support d'assemblage (80) sensiblement de révolution autour d'un axe de révolution (YY'), l'assemblage (24) selon la direction circonférentielle (XX') du support d'assemblage (80),
procédé **caractérisé en ce que,** au plus tard lors de l'étape d'enroulage, la première structure (10) de premiers éléments filaires (64, 66) présente au moins une discontinuité transversale (100) s'étendant transversalement continûment sur toute la largeur de la première structure (10) de premiers éléments filaires (64, 66), la ou chaque discontinuité transversale (100) étant définie par un couple de deux bords transversaux (102, 104) s'étendant transversalement chacun sur toute la largeur de la première structure (10) de premiers éléments filaires (64, 66) et situé chacun de part et d'autre de la ou de chaque discontinuité transversale (100) selon la première direction générale (G1),
**en ce que,** postérieurement à l'étape d'enroulage, on écarte radialement par rapport à l'axe de révolution (YY') du support d'assemblage (80), la première structure (10) de premiers éléments filaires (64, 66) de façon à éloigner, selon la direction circonférentielle (XX') du support d'assemblage (80), chaque bord transversal (102, 104) de chaque couple l'un de l'autre de sorte que l'on allonge, selon la direction circonférentielle (XX') du support d'assemblage (80), la première structure (10) de premiers éléments filaires (64, 66).

2. Procédé selon la revendication précédente, dans lequel la première structure (10) de premiers éléments filaires (64, 66) présente plusieurs discontinuités transversales (100) réparties le long de la première structure (10) de premiers éléments filaires (64, 66) selon la première direction générale (G1), chaque discontinuité transversale (100) s'étendant transversalement continûment sur toute la largeur de la première structure (10) de premiers éléments filaires (64, 66).

3. Procédé selon la revendication 1 ou 2, dans lequel la première structure (10) de premiers éléments filaires (64, 66) est un premier tissu (26) s'étendant selon la première direction générale (G1), le premier tissu (26) comprenant :
- des premiers éléments filaires (64), dits de chaine, sensiblement parallèles entre eux et s'étendant selon une première direction (C1), dite de chaine, et
- des premiers éléments filaires (66), dits de trame, sensiblement parallèles entre eux et s'étendant selon une première direction (T1), dite de trame, les premiers éléments filaires (66) de trame s'entrecroisant avec les premiers éléments filaires de chaine (64),
procédé dans lequel, au plus tard lors de l'étape d'enroulage, chaque premier élément filaire (64) de chaine de la première structure (10) de premiers éléments filaires (64, 66) présente au moins une discontinuité locale (106), la ou chaque discontinuité locale (106) étant définie par un couple de deux extrémités (108, 110) de chaque premier élément filaire (64) de chaine de la première structure (10) de premiers éléments filaires (64, 66) et située chacune de part et d'autre de la ou de chaque discontinuité locale (106) selon la première direction de chaine (C1),
on écarte radialement par rapport à l'axe de révolution (YY') du support d'assemblage (80), la première structure (10) de premiers éléments filaires (64, 66) de façon à éloigner, selon la direction circonférentielle (XX') du support d'assemblage (80), chaque extrémité (108, 110) de chaque couple l'une de l'autre.

4. Procédé selon la revendication précédente, dans lequel la première direction de chaine (C1) est sensiblement parallèle à la première direction générale (G1).

5. Procédé selon l'une quelconque des revendications précédentes, dans lequel la première structure (10) de premiers éléments filaires (64, 66) comprenant:
- un premier groupe de plusieurs zones transversales (Z1), chaque zone transversale (Z1) du premier groupe comprenant une discontinuité transversale s'étendant continûment sur toute la largeur de la zone transversale (Z1) du premier groupe,
- un deuxième groupe de plusieurs zones transversales (Z2), chaque zone transversale (Z2) du deuxième groupe étant continue sur toute la largeur de la zone transversale (Z2) du deuxième groupe, et
chaque zone transversale (Z1, Z2) de chaque premier et deuxième groupe s'étendant sur toute la largeur de la première structure (10) de premiers éléments filaires (64, 66) et les zones transversales (Z1, Z2) du premier et du deuxième groupe étant réparties le long de la première structure (10) de premiers éléments filaires (64, 66) selon la première direction générale (G1),
postérieurement à l'étape d'enroulage, on écarte radialement par rapport à l'axe de révolution (YY') du support d'assemblage (80), la première structure (10) de premiers éléments filaires (64, 66) de façon à éloigner, selon la direction circonférentielle (XX') du support d'assemblage (80), chaque bord transversal (102, 104) de chaque couple l'un de l'autre de sorte que l'on allonge, selon la direction circonférentielle (XX') du support d'assemblage (80), chaque zone transversale (Z1) du premier groupe.

6. Procédé selon la revendication précédente, dans lequel on écarte radialement par rapport à l'axe de révolution (YY') du support d'assemblage (80), la première structure (10) de premiers éléments filaires (64, 66) de façon à n'allonger, selon la direction circonférentielle (XX') du support d'assemblage (80), sensiblement aucune zone transversale (Z2) du deuxième groupe.

7. Procédé selon l'une quelconque des revendications 5 ou 6, dans lequel chaque élément filaire porteur (32) comprenant :
- une portion filaire porteuse (74) s'étendant entre la première structure (10) de premiers éléments filaires (64, 66) et la deuxième structure (12) de deuxièmes éléments filaires (68, 70) et
- une première portion filaire d'ancrage (76) de chaque élément filaire porteur (32) dans la première structure (10) de premiers éléments filaires (64, 66) prolongeant la portion filaire porteuse (74) dans la première structure (10) de premiers éléments filaires (64, 66):
- chaque zone transversale (Z1) du premier groupe est dépourvue de toute première portion filaire d'ancrage (76) sur toute la largeur de la première structure (10) de premiers éléments filaires (64, 66),
- chaque zone transversale (Z2) du deuxième groupe de zone(s) droite(s) transversale(s) comprend au moins une première portion filaire d'ancrage (76) sur la largeur de la première structure (10) de premiers éléments filaires (64, 66).

8. Procédé selon la revendication précédente, dans lequel on écarte radialement par rapport à l'axe de révolution (YY') du support d'assemblage (80), la première structure (10) de premiers éléments filaires (64, 66) de façon à n'allonger, selon la direction circonférentielle (XX') du support d'assemblage (80), sensiblement aucune première portion filaire d'ancrage (76).

9. Procédé selon l'une quelconque des revendications 5 à 8, dans lequel chaque zone transversale (Z1) du premier groupe alterne, selon la première direction générale (G1), avec une zone transversale (Z2) du deuxième groupe.

10. Procédé selon l'une quelconque des revendications précédentes, dans lequel, préalablement à une étape dans laquelle on ménage la ou chaque discontinuité transversale (100), on imprègne la première structure (10) de premiers éléments filaires (64, 66) et la deuxième structure (12) de deuxièmes éléments filaires (68, 70) respectivement par une première composition polymérique (34) et une deuxième composition polymérique (36).

11. Procédé selon la revendication précédente, dans lequel on ménage la ou chaque discontinuité transversale (100) en découpant la première structure (10) de premiers éléments filaires (64, 66) sur toute la largeur de la première structure (10) de premiers éléments filaires (64, 66) préalablement à l'étape d'enroulage sur le support d'assemblage (80).

12. Procédé selon la revendication précédente, dans lequel, préalablement à l'étape de ménagement de la ou chaque discontinuité transversale (100), on écarte la première structure (10) de premiers éléments filaires (64, 66) et la deuxième structure (12) de deuxièmes éléments filaires (68, 70) l'une de l'autre.

13. Procédé selon la revendication précédente, dans lequel, postérieurement à l'étape de ménagement de la ou chaque discontinuité transversale (100), on rapproche la première structure (10) de premiers éléments filaires (64, 66) et la deuxième structure (12) de deuxièmes éléments filaires (68, 70) l'une de l'autre.

14. Procédé selon l'une quelconque des revendications précédentes, dans lequel on écarte radialement par rapport à l'axe de révolution (YY') la première structure (10) de premiers éléments filaires (64, 66) de façon à former un espace annulaire intérieur (52) délimité radialement par une face interne (42) d'une première structure de révolution (25) comprenant la première structure (10) de premiers éléments filaires (64, 66) et une face interne (46) d'une deuxième structure de révolution (27) comprenant la deuxième structure (12) de deuxièmes éléments filaires (68, 70).

15. Procédé selon la revendication précédente, dans lequel on forme l'espace annulaire intérieur (52) par pressurisation par un gaz de gonflage d'une cavité fermée (59), cette cavité fermée (59) étant formée au moins en partie par l'espace annulaire intérieur (52).

## Patentansprüche

1. Verfahren zur Herstellung eines Reifens (20) mittels einer Anordnung (24), welche umfasst:
- eine erste Struktur (10) aus ersten fadenförmigen Elementen (64, 66), wobei sich die erste Struktur (10) aus ersten fadenförmigen Elementen (64, 66) in einer ersten allgemeinen Richtung (G1) erstreckt,
- eine zweite Struktur (12) aus zweiten fadenförmigen Elementen (68, 70),
- eine Tragstruktur (30), die tragende fadenförmige Elemente (32) umfasst, welche die erste Struktur (10) aus ersten fadenförmigen Elementen (64, 66) und die zweite Struktur (12) aus zweiten fadenförmigen Elementen (68, 70) miteinander verbinden,
wobei bei diesem Verfahren die Anordnung (24) um einen Anordnungsträger (80), der im Wesentlichen rotationssymmetrisch um eine Rotationsachse (YY') ist, in der Umfangsrichtung (XX') des Anordnungsträgers (80) gewickelt wird,
wobei das Verfahren **dadurch gekennzeichnet ist, dass** spätestens im Schritt des Wickelns die erste Struktur (10) aus ersten fadenförmigen Elementen (64, 66) mindestens eine quer verlaufende Diskontinuität (100) aufweist, die sich durchgehend quer über die gesamte Breite der ersten Struktur (10) aus ersten fadenförmigen Elementen (64, 66) erstreckt, wobei die oder jede quer verlaufende Diskontinuität (100) durch ein Paar von zwei Querrändern (102, 104) definiert ist, die sich jeweils quer über die gesamte Breite der ersten Struktur (10) aus ersten fadenförmigen Elementen (64, 66) erstrecken und sich in der ersten allgemeinen Richtung (G1) beiderseits der oder jeder quer verlaufenden Diskontinuität (100) befinden,
dadurch, dass nach dem Schritt des Wickelns die erste Struktur (10) aus ersten fadenförmigen Elementen (64, 66) bezüglich der Rotationsachse (YY') des Anordnungsträgers (80) so radial wegbewegt wird, dass die Querränder (102, 104) jedes Paares in der Umfangsrichtung (XX') des Anordnungsträgers (80) voneinander entfernt werden, derart, dass die erste Struktur (10) aus ersten fadenförmigen Elementen (64, 66) in der Umfangsrichtung (XX') des Anordnungsträgers (80) verlängert wird.

2. Verfahren nach dem vorhergehenden Anspruch, wobei die erste Struktur (10) aus ersten fadenförmigen Elementen (64, 66) mehrere quer verlaufende Diskontinuitäten (100) aufweist, die entlang der ersten Struktur (10) aus ersten fadenförmigen Elementen (64, 66) in der ersten allgemeinen Richtung (G1) verteilt sind, wobei sich jede quer verlaufende Diskontinuität (100) durchgehend quer über die gesamte Breite der ersten Struktur (10) aus ersten fadenförmigen Elementen (64, 66) erstreckt.

3. Verfahren nach Anspruch 1 oder 2, wobei die erste Struktur (10) aus ersten fadenförmigen Elementen (64, 66) ein erstes Gewebe (26) ist, das sich in der ersten allgemeinen Richtung (G1) erstreckt, wobei das erste Gewebe (26) umfasst:
- erste fadenförmige Elemente (64), erste Kettfadenelemente genannt, die im Wesentlichen parallel zueinander sind und sich in einer ersten Richtung (C1), erste Kettrichtung genannt, erstrecken, und
- erste fadenförmige Elemente (66), erste Schussfadenelemente genannt, die im Wesentlichen parallel zueinander sind und sich in einer ersten Richtung (T1), erste Schussrichtung genannt, erstrecken, wobei sich die ersten Schussfadenelemente (66) mit den ersten Kettfadenelementen (64) überkreuzen,
wobei bei diesem Verfahren spätestens im Schritt des Wickelns jedes erste Kettfadenelement (64) der ersten Struktur (10) aus ersten fadenförmigen Elementen (64, 66) mindestens eine lokale Diskontinuität (106) aufweist, wobei die oder jede lokale Diskontinuität (106) durch ein Paar von zwei Enden (108, 110) jedes ersten Kettfadenelements (64) der ersten Struktur (10) aus ersten fadenförmigen Elementen (64, 66) definiert ist, die sich in der ersten Kettrichtung (C1) beiderseits der oder jeder lokalen Diskontinuität (106) befinden,
und die erste Struktur (10) aus ersten fadenförmigen Elementen (64, 66) bezüglich der Rotationsachse (YY') des Anordnungsträgers (80) so radial wegbewegt wird, dass die Enden (108, 110) jedes Paares in der Umfangsrichtung (XX') des Anordnungsträgers (80) voneinander entfernt werden.

4. Verfahren nach dem vorhergehenden Anspruch, wobei die erste Kettrichtung (C1) im Wesentlichen parallel zur ersten allgemeinen Richtung (G1) ist.

5. Verfahren nach einem der vorhergehenden Ansprüche, wobei die erste Struktur (10) aus ersten fadenförmigen Elementen (64, 66) umfasst:
- eine erste Gruppe von mehreren Querbereichen (Z1), wobei jeder Querbereich (Z1) der ersten Gruppe eine quer verlaufende Diskontinuität umfasst, die sich durchgehend über die gesamte Breite des Querbereichs (Z1) der ersten Gruppe erstreckt,
- eine zweite Gruppe von mehreren Querbereichen (Z2), wobei jeder Querbereich (Z2) der zweiten Gruppe durchgehend über die gesamte Breite des Querbereichs (Z2) der zweiten Gruppe ist, und
wobei sich jeder Querbereich (Z1, Z2) jeder ersten und zweiten Gruppe über die gesamte Breite der ersten Struktur (10) aus ersten fadenförmigen Elementen (64, 66) erstreckt und die Querbereiche (Z1, Z2) der ersten und der zweiten Gruppe entlang der ersten Struktur (10) aus ersten fadenförmigen Elementen (64, 66) in der ersten allgemeinen Richtung (G1) verteilt sind,
wobei nach dem Schritt des Wickelns die erste Struktur (10) aus ersten fadenförmigen Elementen (64, 66) bezüglich der Rotationsachse (YY') des Anordnungsträgers (80) so radial wegbewegt wird, dass die Querränder (102, 104) jedes Paares in der Umfangsrichtung (XX') des Anordnungsträgers (80) voneinander entfernt werden, derart, dass jeder Querbereich (Z1) der ersten Gruppe in der Umfangsrichtung (XX') des Anordnungsträgers (80) verlängert wird.

6. Verfahren nach dem vorhergehenden Anspruch, wobei die erste Struktur (10) aus ersten fadenförmigen Elementen (64, 66) bezüglich der Rotationsachse (YY') des Anordnungsträgers (80) so radial wegbewegt wird, dass im Wesentlichen kein Querbereich (Z2) der zweiten Gruppe in der Umfangsrichtung (XX') des Anordnungsträgers (80) verlängert wird.

7. Verfahren nach einem der Ansprüche 5 oder 6, wobei jedes tragende fadenförmige Element (32) umfasst:
- einen tragenden fadenförmigen Abschnitt (74), der sich zwischen der ersten Struktur (10) aus ersten fadenförmigen Elementen (64, 66) und der zweiten Struktur (12) aus zweiten fadenförmigen Elementen (68, 70) erstreckt, und
- einen ersten fadenförmigen Abschnitt zur Verankerung (76) jedes tragenden fadenförmigen Elements (32) in der ersten Struktur (10) aus ersten fadenförmigen Elementen (64, 66), der den tragenden fadenförmigen Abschnitt (74) in der ersten Struktur (10) aus ersten fadenförmigen Elementen (64, 66) verlängert:
- wobei jeder Querbereich (Z1) der ersten Gruppe auf der gesamten Breite der ersten Struktur (10) aus ersten fadenförmigen Elementen (64, 66) frei von jeglichen ersten fadenförmigen Abschnitten zur Verankerung (76) ist,
- wobei jeder Querbereich (Z2) der zweiten Gruppe von geradem (geraden) Querbereich(en) mindestens einen ersten fadenförmigen Abschnitt zur Verankerung (76) auf der Breite der ersten Struktur (10) aus ersten fadenförmigen Elementen (64, 66) umfasst.

8. Verfahren nach dem vorhergehenden Anspruch, wobei die erste Struktur (10) aus ersten fadenförmigen Elementen (64, 66) bezüglich der Rotationsachse (YY') des Anordnungsträgers (80) so radial wegbewegt wird, dass im Wesentlichen kein erster fadenförmiger Abschnitt zur Verankerung (76) in der Umfangsrichtung (XX') des Anordnungsträgers (80) verlängert wird.

9. Verfahren nach einem der Ansprüche 5 bis 8, wobei sich jeder Querbereich (Z1) der ersten Gruppe mit einem Querbereich (Z2) der zweiten Gruppe abwechselt.

10. Verfahren nach einem der vorhergehenden Ansprüche, wobei vor einem Schritt, in welchem die oder jede quer verlaufende Diskontinuität (100) ausgebildet wird, die erste Struktur (10) aus ersten fadenförmigen Elementen (64, 66) und die zweite Struktur (12) aus zweiten fadenförmigen Elementen (68, 70) mit einer ersten Polymerzusammensetzung (34) bzw. einer zweiten Polymerzusammensetzung (36) imprägniert werden.

11. Verfahren nach dem vorhergehenden Anspruch, wobei die oder jede quer verlaufende Diskontinuität (100) ausgebildet wird, indem die erste Struktur (10) aus ersten fadenförmigen Elementen (64, 66) auf der gesamten Breite der ersten Struktur (10) aus ersten fadenförmigen Elementen (64, 66) vor dem Schritt des Wickelns auf den Anordnungsträger (80) zerschnitten wird.

12. Verfahren nach dem vorhergehenden Anspruch, wobei vor dem Schritt des Ausbildens der oder jeder quer verlaufenden Diskontinuität (100) die erste Struktur (10) aus ersten fadenförmigen Elementen (64, 66) und die zweite Struktur (12) aus zweiten fadenförmigen Elementen (68, 70) voneinander wegbewegt werden.

13. Verfahren nach dem vorhergehenden Anspruch, wobei nach dem Schritt des Ausbildens der oder jeder quer verlaufenden Diskontinuität (100) die erste Struktur (10) aus ersten fadenförmigen Elementen (64, 66) und die zweite Struktur (12) aus zweiten fadenförmigen Elementen (68, 70) aneinander angenähert werden.

14. Verfahren nach einem der vorhergehenden Ansprüche, wobei die erste Struktur (10) aus ersten fadenförmigen Elementen (64, 66) bezüglich der Rotationsachse (YY') so radial wegbewegt wird, dass ein innerer ringförmiger Raum (52) gebildet wird, der radial von einer Innenseite (42) einer ersten Rotationsstruktur (25), welche die erste Struktur (10) aus ersten fadenförmigen Elementen (64, 66) umfasst, und einer Innenseite (46) einer zweiten Rotationsstruktur (27), welche die die zweite Struktur (12) aus zweiten fadenförmigen Elementen (68, 70) umfasst, begrenzt wird.

15. Verfahren nach dem vorhergehenden Anspruch, wobei der innere ringförmige Raum (52) durch Druckbeaufschlagung eines geschlossenen Hohlraums mit einem Aufblasgas gebildet wird, wobei dieser geschlossene Hohlraum wenigstens teilweise von dem inneren ringförmigen Raum (52) gebildet wird.

## Claims

1. Method for manufacturing a tyre (20) by means of an assembly (24) comprising:
- a first structure (10) of first filamentary elements (64, 66), the first structure (10) of first filamentary elements (64, 66) extending in a first general direction (G1),
- a second structure (12) of second filamentary elements (68, 70),
- a supporting structure (30) comprising supporting filamentary elements (32) connecting the first structure (10) of first filamentary elements (64, 66) and the second structure (12) of second filamentary elements (68, 67) to one another,
in which method the assembly (24) is wound, around an assembly support (80) substantially of revolution about an axis of revolution (YY'), in the circumferential direction (XX') of the assembly support (80),
which method is **characterized in that,** at the latest during the winding step, the first structure (10) of first filamentary elements (64, 66) has at least one transverse discontinuity (100) extending transversely continuously over the whole width of the first structure (10) of first filamentary elements (64, 66), the or each transverse discontinuity (100) being defined by a pair of two transverse edges (102, 104) each extending transversely over the whole width of the first structure (10) of first filamentary elements (64, 66) and each situated on either side of the or each transverse discontinuity (100) in the first general direction (G1),
**in that,** subsequent to the winding step, the first structure (10) of first filamentary elements (64, 66) is separated radially with respect to the axis of revolution (YY') of the assembly support (80) in such a way as to move each transverse edge (102, 104) of each pair away from one another in the circumferential direction (XX') of the assembly support (80) such that the first structure (10) of first filamentary elements (64, 66) is lengthened in the circumferential direction (XX') of the assembly support (80).

2. Method according to the preceding claim, wherein the first structure (10) of first filamentary elements (64, 66) has a plurality of transverse discontinuities (100) distributed along the first structure (10) of first filamentary elements (64, 66) in the first general direction (G1), each transverse discontinuity (100) extending transversely continuously over the whole width of the first structure (10) of first filamentary elements (64, 66).

3. Method according to Claim 1 or 2, wherein the first structure (10) of first filamentary elements (64, 66) is a first woven fabric (26) extending in the first general direction (G1), the first woven fabric (26) comprising:
- first filamentary elements (64), termed warp elements, which are substantially parallel to one another and extend in a first direction (C1), termed warp direction, and
- first filamentary elements (66), termed weft elements, which are substantially parallel to one another and extend in a first direction (T1), termed weft direction, the first filamentary weft elements (66) interlacing with the first filamentary warp elements (64),
in which method, at the latest during the winding step, each first filamentary warp element (64) of the first structure (10) of first filamentary elements (64, 66) has at least one local discontinuity (106), the or each local discontinuity (106) being defined by a pair of two ends (108, 110) of each first filamentary warp element (64) of the first structure (10) of first filamentary elements (64, 66) and each situated on either side of the or each local discontinuity (106) in the first warp direction (C1),
the first structure (10) of first filamentary elements (64, 66) is separated radially with respect to the axis of revolution (YY') of the assembly support (80) in such a way as to move each end (108, 110) of each pair away from one another in the circumferential direction (XX') of the assembly support (80).

4. Method according to the preceding claim, wherein the first warp direction (C1) is substantially parallel to the first general direction (G1).

5. Method according to any one of the preceding claims, wherein the first structure (10) of first filamentary elements (64, 66) comprises:
- a first group of a plurality of transverse zones (Z1), each transverse zone (Z1) of the first group comprising a transverse discontinuity extending continuously over the whole width of the transverse zone (Z1) of the first group,
- a second group of a plurality of transverse zones (Z2), each transverse zone (Z2) of the second group being continuous over the whole width of the transverse zone (Z2) of the second group, and
each transverse zone (Z1, Z2) of each first and second group extending over the whole width of the first structure (10) of first filamentary elements (64, 66) and the transverse zones (Z1, Z2) of the first and the second group being distributed along the first structure (10) of first filamentary elements (64, 66) in the first general direction (G1),
subsequent to the winding step, the first structure (10) of first filamentary elements (64, 66) is separated radially with respect to the axis of revolution (YY') of the assembly support (80) in such a way as to move each transverse edge (102, 104) of each pair away from one another in the circumferential direction (XX') of the assembly support (80) such that each transverse zone (Z1) of the first group is lengthened in the circumferential direction (XX') of the assembly support (80).

6. Method according to the preceding claim, wherein the first structure (10) of first filamentary elements (64, 66) is separated radially with respect to the axis of revolution (YY') of the assembly support (80) in such a way that substantially no transverse zone (Z2) of the second group is lengthened in the circumferential direction (XX') of the assembly support (80).

7. Method according to either one of Claims 5 or 6, wherein each supporting filamentary element (32) comprises:
- a supporting filamentary portion (74) extending between the first structure (10) of first filamentary elements (64, 66) and the second structure (12) of second filamentary elements (68, 70), and
- a first anchoring filamentary portion (76) for anchoring each supporting filamentary element (32) in the first structure (10) of first filamentary elements (64, 66), prolonging the supporting filamentary portion (74) in the first structure (10) of first filamentary elements (64, 66):
- each transverse zone (Z1) of the first group is devoid of any first anchoring filamentary portion (76) over the whole width of the first structure (10) of first filamentary elements (64, 66),
- each transverse zone (Z2) of the second transverse straight zone(s) group comprises at least one first anchoring filamentary portion (76) over the width of the first structure (10) of first filamentary elements (64, 66).

8. Method according to the preceding claim, wherein the first structure (10) of first filamentary elements (64, 66) is separated radially with respect to the axis of revolution (YY') of the assembly support (80) in such a way that substantially no first anchoring filamentary portion (76) is lengthened in the circumferential direction (XX') of the assembly support (80).

9. Method according to any one of Claims 5 to 8, wherein each transverse zone (Z1) of the first group alternates, in the first general direction (G1), with a transverse zone (Z2) of the second group.

10. Method according to any one of the preceding claims, wherein, prior to a step in which the or each transverse discontinuity (100) is formed, the first structure (10) of first filamentary elements (64, 66) and the second structure (12) of second filamentary elements (68, 70) are respectively impregnated with a first polymeric composition (34) and a second polymeric composition (36).

11. Method according to the preceding claim, wherein the or each transverse discontinuity (100) is formed by cutting the first structure (10) of first filamentary elements (64, 66) over the whole width of the first structure (10) of first filamentary elements (64, 66) prior to the step of winding on the assembly support (80) .

12. Method according to the preceding claim, wherein, prior to the step of forming the or each transverse discontinuity (100), the first structure (10) of first filamentary elements (64, 66) and the second structure (12) of second filamentary elements (68, 70) are separated from one another.

13. Method according to the preceding claim, wherein, subsequent to the step of forming the or each transverse discontinuity (100), the first structure (10) of first filamentary elements (64, 66) and the second structure (12) of second filamentary elements (68, 70) are moved towards one another.

14. Method according to any one of the preceding claims, wherein the first structure (10) of first filamentary elements (64, 66) is separated radially with respect to the axis of revolution (YY') so as to form an inner annular space (52) delimited radially by an internal face (42) of a first structure of revolution (25) comprising the first structure (10) of first filamentary elements (64, 66) and an internal face (46) of a second structure of revolution (27) comprising the second structure (12) of second filamentary elements (68, 70).

15. Method according to the preceding claim, wherein the inner annular space (52) is formed by pressurization with a gas for inflating a closed cavity (59), this closed cavity (59) being formed at least in part by the inner annular space (52).
